# EUROPEAN PATENT SPECIFICATION

(11) **EP 4 190 617 B1**
(45) Date of publication and mention of the grant of the patent: **09.12.2026**
(21) Application number: 21848673.6
(22) Date of filing: 21.07.2021
(51) Int. Cl.: B60K 35/10, B60K 35/22, B60K 35/26, B60K 35/28, B60K 35/60, B60K 35/81, E02F 9/20, E02F 9/26, G06F 3/0362, G06F 3/0481, G06F 3/0482, G06F 3/04847, G06F 3/0487, G06F 3/0489

(54) **OPERATING DEVICE, WORK VEHICLE, AND OPERATION CONTROL METHOD**
BETRIEBSVORRICHTUNG, ARBEITSFAHRZEUG UND BETRIEBSSTEUERUNGSVERFAHREN
DISPOSITIF D'OPÉRATION, VÉHICULE DE TRAVAIL ET PROCÉDÉ DE COMMANDE D'OPÉRATION

(30) Priority: 30.07.2020 JP 2020129243
(43) Date of publication of application: 07.06.2023
(73) Proprietor: Yanmar Holdings Co., Ltd., Osaka-shi, Osaka 530-0013 (JP)
(72) Inventor: KAWAGUCHI, Daisuke, Chikugo-shi, Fukuoka 833-0055 (JP); TAMURA, Kazuki, Chikugo-shi, Fukuoka 833-0055 (JP); SUZUKI, Shogo, Chikugo-shi, Fukuoka 833-0055 (JP)
(74) Representative: Sekiguchi, Kazuya
(86) International application number: PCT/JP2021/027290
(87) International publication number: WO 2022/024913

(56) References cited:
- WO-A1-2016/068185
- WO-A1-2019/189507
- JP-A- 2008 069 696
- JP-A- 2016 082 953
- JP-A- 2016 199 268
- US-A1- 2015 107 552
- US-A1- 2017 231 148

## Description

### TECHNICAL FIELD

The present invention relates to an operating device, a work vehicle, and an operation control method.

### BACKGROUND ART

The work machine described in Patent Literature 1 comprises a display device and a jog dial. The jog dial operates display items displayed on the display device. The display device and the jog dial are located in close proximity and in the same field of vision to an operator seated in the driver's seat. Thus, the operator can operate the jog dial while looking at the display device, which facilitates intuitive operation of the display device.

### CITATION LIST

### Patent Literature

Patent Literature 1: Japanese Unexamined Patent Application Publication No. 2019-116754

### DISCLOSURE OF INVENTION

### PROBLEMS TO BE SOLVED BY THE INVENTION

However, in addition to the jog dial, the work machine described in the Patent Literature 1 requires a jog dial to adjust a rotation speed of an engine. Therefore, the number of parts increases.

The present invention was made in view of the problems described above, and has an object to provide an operating device, a work vehicle, and an operation control method that can improve operability while suppressing an increase in the number of parts.

### MEANS FOR SOLVING THE PROBLEMS

According to an aspect of the present invention, the operating device comprises a dial, a display unit, and an allocation unit. The dial receives a rotational operation. The allocation unit selectively allocates to the dial either an engine operational function to adjust the rotation speed of an engine or a screen operational function to perform an operation in accordance with a screen displayed on the display unit.

According to another aspect of the present invention, the work vehicle comprises the operating device described above and a work machine that performs work.

According to yet another aspect of the present invention, the operation control method is executed in an operating device that comprises a dial and a display unit. The operation control method comprises the steps of selectively allocating to the dial either an engine operational function to adjust a rotation speed of an engine or a screen operational function to perform an operation in accordance with a screen displayed on the display unit, and receiving a rotational operation by the dial.

### EFFECT OF THE INVENTION

The present invention provides an operating device, a work vehicle, and an operation control method that can improve operability while suppressing an increase in the number of parts.

### BRIEF DESCRIPTION OF DRAWINGS

FIG. 1 is a perspective view illustrating an upper swivel body of a work vehicle according to an embodiment of the present invention.
FIG. 2(a) is a perspective view illustrating a dial operation unit of the work vehicle according to the embodiment. FIG. 2(b) is a plan view illustrating the dial operation unit of the work vehicle according to the embodiment.
FIG. 3 is a figure illustrating a display unit and a plurality of push buttons of the work vehicle according to the embodiment.
FIG. 4 is a block diagram illustrating the work vehicle according to a first embodiment.
FIG. 5(a) is a figure illustrating a first function notification image displayed according to a fact that an engine operational function is allocated to a dial of the work vehicle according to the embodiment. FIG. 5(b) is a figure illustrating a lighting state of the dial operation unit in a case where the engine operational function is allocated to the dial of the work vehicle according to the embodiment.
FIG. 6 is a figure illustrating a rotation speed image displayed according to an operation of the dial in the case where the engine operational function is allocated to the dial of the work vehicle according to the embodiment.
FIG. 7(a) is a figure illustrating a second function notification image displayed according to a fact that a screen operational function is allocated to the dial of the work vehicle according to the embodiment. FIG. 7(b) is a figure illustrating a lighting state of the dial operation unit when the screen operational function is allocated to the dial of the work vehicle according to the embodiment.
FIG. 8 is a flowchart illustrating a part of an operation control method executed in the work vehicle according to the embodiment.
FIG. 9 is a flowchart illustrating another part of the operation control method executed in the work vehicle according to the embodiment.
FIG. 10 is a figure illustrating an example of a screen transition in the display unit of the work vehicle according to the embodiment.
FIG. 11 is a flowchart illustrating a first screen control method executed in the work vehicle according to the embodiment.
FIG. 12 is a figure illustrating another example of the screen transition in the display unit of the work vehicle according to the embodiment.
FIG. 13 is a flowchart illustrating a part of a second screen control method executed in the work vehicle according to the embodiment.
FIG. 14 is a flowchart illustrating another part of the second screen control method executed in the work vehicle according to the embodiment.

### DESCRIPTION OF EMBODIMENTS

Embodiments of the present invention will be described hereinafter with reference to the accompanying drawings. Note that, in the drawings, the same reference signs are used for the same or equivalent components, and repeated descriptions are omitted.

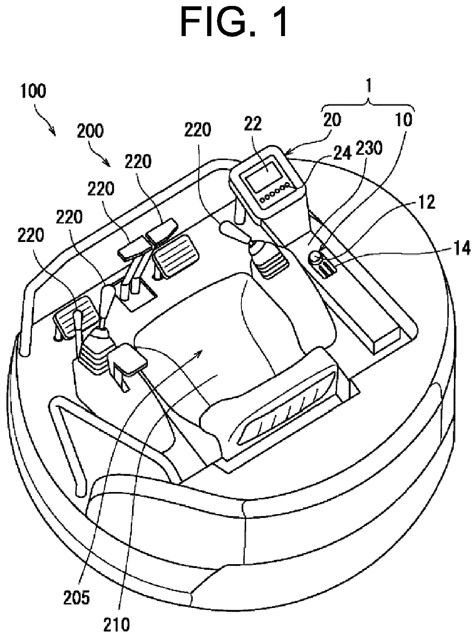

Next, a work vehicle 100 according to an embodiment of the present invention will be described with reference to FIG. 1. The following is an example of this embodiment where the work vehicle 100 is a hydraulic excavator. A hydraulic excavator is an example of construction machinery.

FIG. 1 is a perspective view illustrating an upper swivel body 200 of the work vehicle 100 according to the embodiment. In FIG. 1, the roof the upper swivel body 200 is omitted to make the drawing easier to see.

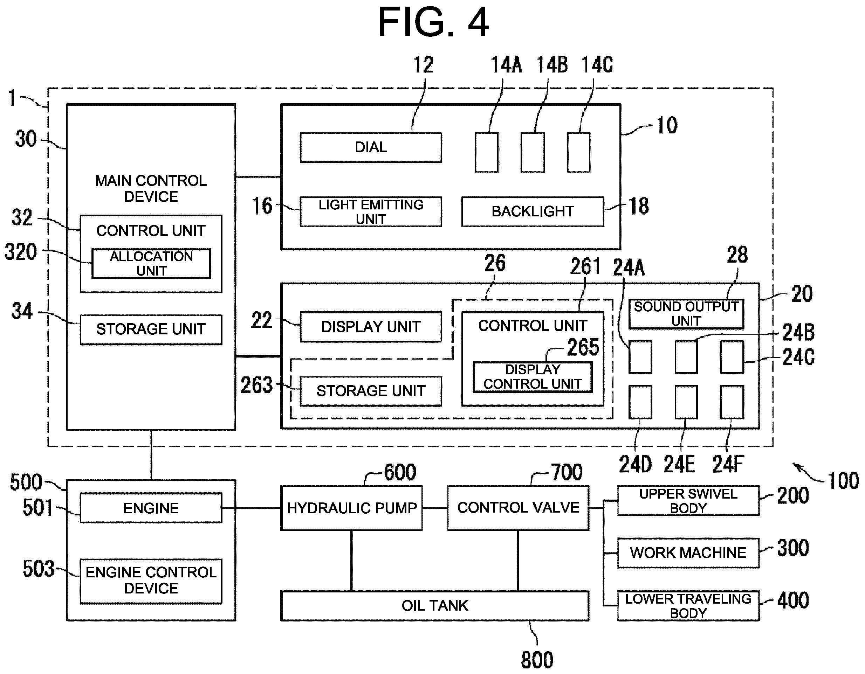

As illustrated in FIG. 1, the work vehicle 100 comprises the upper swivel body 200. The upper swivel body 200 swivels with respect to a lower traveling body 400 (FIG. 4 illustrated later). The upper swivel body 200 is driven by a hydraulic pump 600 (FIG. 4 illustrated later) and a hydraulic motor (not illustrated) to swivel. A work machine 300 (FIG. 4 illustrated later) is attached to the upper swivel body 200.

Specifically, the upper swivel body 200 comprises an operating device 1, a control cabin 205, a seat 210, a plurality of operating levers 220, and an arrangement member 230.

The operating device 1, the seat 210, the plurality of operating levers 220, and the arrangement member 230 are arranged in the control cabin 205. The operator is seated in the seat 210. The operator is the manipulator of the work vehicle 100. Each of the plurality of operating levers 220 receives operations from the operator. The operating lever 220 is an operating member for operating the work vehicle 100.

The operating device 1 receives operations from the operator, operates the work vehicle 100, inputs various information to the work vehicle 100, and displays various information about the work vehicle 100. The operating device 1 comprises a dial operation unit 10 and an operation unit 20.

The dial operation unit 10 receives a rotational operation from the operator. The dial operation unit 10 preferably receives a pressing operation from the operator. The dial operation unit 10 is arranged on the arrangement member 230. The shape and structure of the arrangement member 230 are not particularly limited as long as the dial operation unit 10 can be arranged on the arrangement member 230.

Specifically, the dial operation unit 10 comprises a dial 12. The dial operation unit 10 preferably further comprises at least one switch 14. In this embodiment, the dial operation unit 10 comprises a plurality of switches 14 (e.g., three switches 14). The switches 14 are arranged next to the dial 12 and receive the operation from the operator. The details of the dial 12 and each of the switches 14 will be described below. The switch 14 corresponds to an example of an "operating element" or a "first operating element".

The operation unit 20 displays various information and receives a pressing operation from the operator. The operation unit 20 comprises a display unit 22 and at least one push button 24. In this embodiment, the operation unit 20 comprises a plurality of push buttons 24 (e.g., six push buttons 24). The push button 24 corresponds to an example of a "second operating element". The display unit 22 displays various information about the work vehicle 100. For example, the display unit 22 displays a status of the work vehicle 100, a graphical user interface (GUI), or a camera image. The display unit 22 is, for example, a liquid crystal display or an organic electroluminescent display. The display unit 22 may comprise a touch panel. In this case, each of the push buttons 24 may be displayed on the display unit 22 as a widget in the GUI.

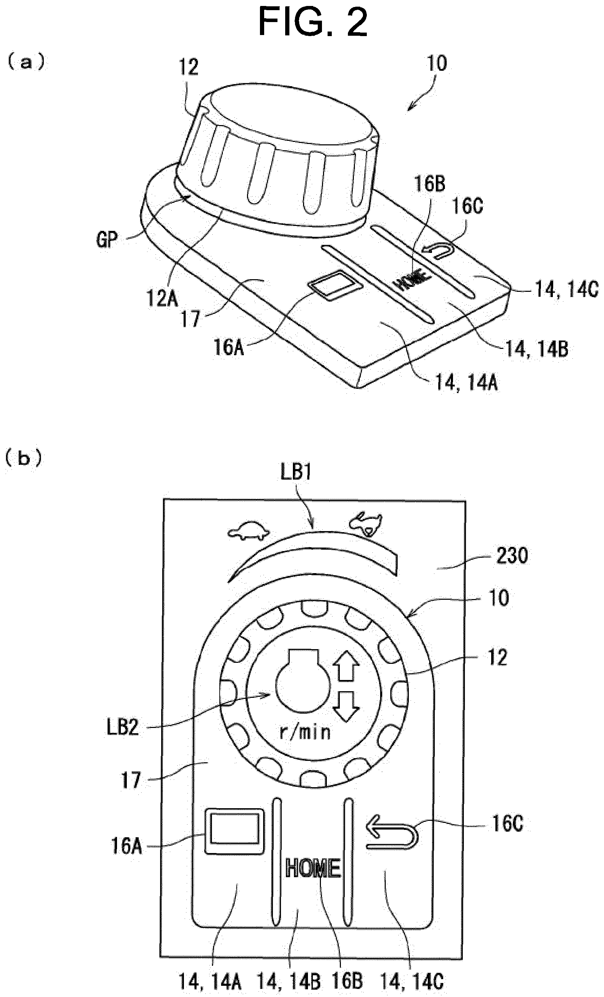

Next, the dial operation unit 10 will be described with reference to FIG. 2(a) and (b). FIG. 2(a) is a perspective view illustrating the dial operation unit 10. FIG. 2(b) is a plan view illustrating the dial operation unit 10.

As illustrated in FIG. 2(b), the dial operation unit 10 preferably further comprises a base member 17. The dial 12 and the plurality of switches 14 are arranged on the base member 17. The shape and structure of the base member 17 is not particularly limited as long as the dial 12 and the switches 14 can be arranged on the base member 17.

The dial 12 receives a rotational operation from the operator. As a result, the dial 12 rotates. The dial 12 comprises, for example, a dial body to be gripped by the operator, a rotation axis, and a rotation sensor to detect the amount of rotation of the dial body. The dial body has, for example, an abbreviated bottomed cylindrical shape. The rotation sensor is, for example, a rotary encoder.

It is preferable that the dial 12 receives not only a rotational operation but also a pressing operation from the operator. In other words, the dial 12 preferably also functions as a push button.

The dial 12 is selectively allocated either an engine operational function or a screen operational function. The engine operational function is a function to adjust (control) a rotation speed of an engine 501 (FIG. 4 illustrated later). The screen operational function is a function to perform an operation in accordance with an image displayed on the display unit 22. In other words, the screen operational function is a function to operate a screen displayed on the display unit 22.

According to this embodiment, the operating device 1 can perform the adjustment of the rotation speed of the engine 501 and the operation in accordance with the screen displayed on the display unit 22 by means of a single dial 12. As a result, it is possible to improve the operability of the operating device 1 by means of the dial 12 while suppressing the increase in the number of parts of the operating device 1 as compared with the case where a dial to adjust the rotation speed of the engine 501 and a dial to perform an operation in accordance with the screen displayed on the display unit 22 are provided respectively.

In addition, in this embodiment, the dial 12 is shared for the rotational operation for adjusting the rotation speed of the engine 501 and the rotational operation for operating the screen of the display unit 22. Therefore, the position of the dial 12 that perform the rotational operation is the same in the case when adjusting the rotation speed of the engine 501 and in the case when operating the screen on the display unit 22. As a result, the operability of the dial 12 can be further improved. Also, for example, by arranging the dial 12 near the operating levers 220, in a case where the engine operational function is allocated to the dial 12, the operator can smoothly perform cooperation between the rotational operation of the dial 12 and the operation of the operating levers 220.

In particular, in this embodiment, a switch 14A among the plurality of switches 14 is an operating element that instructs to change a function to be allocated to the dial 12 between the engine operational function and the screen operational function. Thus, the operator can easily change a function to be allocated to the dial 12 by operating the switch 14A. The switch 14A has an icon 16A. The icon 16A indicates that the switch 14A is an operating element for changing a function to be allocated to the dial 12.

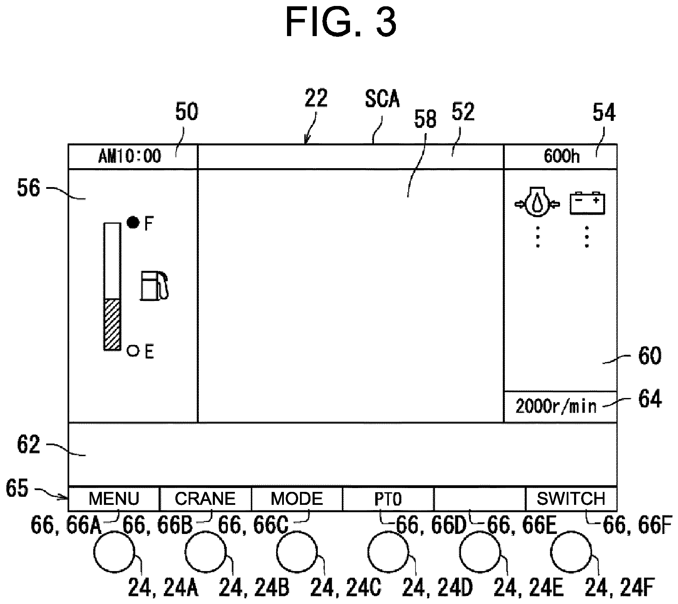

In addition, a switch 14B among the plurality of switches 14 is an operating element that instructs the display unit 22 to display an initial screen SCA (FIG. 3 illustrated later). Thus, the operator can immediately cause the display unit 22 to display the initial screen SCA by operating the switch 14B. The control of the switch 14B will be described below. The switch 14B has an icon 16B. The icon 16B indicates that the switch 14B is an operating element for displaying the initial screen SCA.

Furthermore, a switch 14C among the plurality of switches 14 is an operating element that instructs the display unit 22 to return to a previous screen from a currently displayed screen. Thus, the operator can easily cause the display unit 22 to display the previous screen by operating the switch 14C. The control of the switch 14C will be described below. The switch 14C has an icon 16C. The icon 16C indicates that the switch 14C is an operating element for returning to the previous screen.

In particular, the switches 14A to 14C are arranged next to the dial 12. Therefore, the operator can easily operate the dial 12 and the switches 14A to 14C. In addition, the switches 14A to 14C are arranged side by side in a fixed direction.

Hereinafter, the switches 14A, 14B, and 14C, respectively, may be referred to as an allocation change switch 14A, an initial screen switch 14B, and a return switch 14C.

As illustrated in FIG. 2(b), the operating device 1 comprises at least one of signs LB1 and LB2. Each of the signs LB1 and LB2 indicates that the dial 12 has the engine operational function. Therefore, according to this embodiment, the operator can easily recognize by the sign LB1 or the sign LB2 that the dial 12 has the engine operational function.

In addition, the sign LB1 is arranged next to the dial 12. Thus, the operator can easily recognize that the sign LB1 is a sign related to the dial 12. In the example in FIG. 2(b), the sign LB1 is arranged on the arrangement member 230. The sign LB1 may be arranged on, for example, the base member 17.

On the other hand, the sign LB2 is arranged on the dial 12. Thus, the operator can easily recognize that the sign LB2 is a sign related to the dial 12. In the example in FIG. 2(b), the sign LB2 is arranged on the top surface of the dial 12.

The signs LB1 and LB2 may be formed, for example, by engraving or by painting.

Next, the display unit 22 and the push button 24 will be described with reference to FIG. 3. FIG. 3 is a figure illustrating the display unit 22 and the plurality of push buttons 24. As illustrated in FIG. 3, the display unit 22 displays the initial screen SCA. The initial screen SCA includes a time display area 50, an allocated function display area 52, an operating time display area 54, a fuel information display area 56, a camera image display area 58, and an icon display area 60, an option information display area 62, a rotation speed display area 64, and a selected area 65.

The time display area 50 displays the time. The allocated function display area 52 displays information indicating the function allocated to the dial 12. The details of the allocated function display area 52 will be described below. The operating time display area 54 displays operating time of the work vehicle 100. The fuel information display area 56 displays information about fuel of the engine 501. For example, the fuel information display area 56 displays an amount of remaining fuel in the engine 501 and an available operating time. The camera image display area 58 displays an image from a back camera mounted on the work vehicle 100. The icon display area 60 displays various icons indicating status of each function and each part of the work vehicle 100. The option information display area 62 displays optional information about the work vehicle 100. The rotation speed display area 64 displays the rotation speed of the engine 501.

The selected area 65 is an area for being selected by the operator. Specifically, the selected area 65 includes at least one selected section 66. In this embodiment, the selected area 65 includes a plurality of selected sections 66 (e.g., six selected sections 66). The plurality of selected sections 66 are arranged in a straight line. The selected section 66 is, for example, an object. Part or all of the plurality of selected sections 66 are allocated, for example, functions related to the operation of the screen or functions related to the settings for the work vehicle 100. In the example in FIG. 3, the functions corresponding to the initial screen SCA are allocated to each of the selected sections 66, but in a case where another screen is displayed on the display unit 22, the functions corresponding to the another screen are allocated to each of the selected sections 66. When selection of one of the selected sections 66 on the initial screen SCA is confirmed, the display unit 22 displays a screen in accordance with the function allocated to the selected section 66.

In addition, the plurality of push buttons 24 are arranged corresponding to the plurality of selected sections 66 respectively. The plurality of push buttons 24 are arranged in a straight line.

Specifically, in a case where an engine operational function is allocated to the dial 12, operation of the display unit 22 by the dial operation unit 10 is prohibited. Therefore, in this case, when push button 24 is depressed on the initial screen SCA, the selection of the selected section 66 corresponding to push button 24 is confirmed.

On the other hand, in a case where a screen operational function is allocated to the dial 12, operation of the display unit 22 by the dial operation unit 10 is permitted. Therefore, in this case, the display unit 22 displays, on the initial screen SCA, a cursor (hereinafter referred to as "cursor CS") on one of the plurality of selected sections 66. The cursor CS is an image indicating that a selected section 66 is being selected. Broadly speaking, the cursor CS is an image indicating that an object is being selected. The cursor CS has, for example, a specific color. Then, the cursor CS moves according to the rotational operation of the dial 12, and the selected section 66 to be selected is changed. Furthermore, when a pressing operation is performed against the dial 12, the selection of the selected section 66 is confirmed. In addition, even in the case where the screen operational function is allocated to the dial 12, the same as in the case where the engine operational function is allocated to the dial 12, the selection of the selected section 66 can be confirmed by the push button 24.

Hereinafter, when distinguishing and explaining the plurality of selected sections 66, the plurality of selected sections 66 are referred to as selected sections 66A, 66B, 66C, 66D, 66E, and 66F, respectively. In addition, when distinguishing and explaining the plurality of push buttons 24, the plurality of push buttons 24 are referred to as push buttons 24A, 24B, 24C, 24D, 24E, and 24F, respectively. In the example in FIG. 3, the push buttons 24A to 24F are arranged in one-to-one correspondence to the selected sections 66A to 66F, respectively.

Next, the work vehicle 100 will be described with reference to FIG. 4. FIG. 4 is a block diagram illustrating the work vehicle 100. As illustrated in FIG. 4, the work vehicle 100 comprises, in addition to the operating device 1 and the upper swivel body 200, the work machine 300, the lower traveling body 400, a blade (not illustrated), an engine unit 500, the hydraulic pump 600, a control valve 700, and an oil tank 800. In addition, the operating device 1 further comprises a main control device 30. The main control device 30 is arranged, for example, inside the upper swivel body 200, at a different position from the dial operation unit 10 and the operation unit 20.

The work machine 300 performs work. Specifically, the work machine 300 comprises a bucket (not illustrated), an arm (not illustrated), a boom (not illustrated), and a plurality of hydraulic cylinders (not illustrated).

The upper swivel body 200 is arranged above the lower traveling body 400 via a swivel joint (not illustrated). The lower traveling body 400 travels. Specifically, the lower traveling body 400 comprises a pair of crawlers (not illustrated) and a pair of hydraulic motors (not illustrated).

The engine unit 500 comprises the engine 501 and an engine control device 503. The engine control device 503 controls the engine 501. The engine control device 503 is, for example, an Electronic Control Unit (ECU). Fuel is supplied from a fuel tank (not illustrated) to the engine 501.

The engine 501 drives the hydraulic pump 600. As a result, the hydraulic pump 600 delivers pressure oil to the control valve 700. The pressure oil is oil that is under pressure. The control valve 700 controls the flow of the pressure oil according to the operation of each operating lever 220. The control valve 700 supplies the pressure oil to the hydraulic motor of the upper swivel body 200, each hydraulic cylinder of the work machine 300, each hydraulic motor of the lower traveling body 400, and the hydraulic cylinder (not illustrated) that drives the blade.

The dial operation unit 10 outputs rotational operation information, which indicates the amount and direction of rotation of the dial 12, to the main control device 30. The dial operation unit 10 also outputs pressing operation information (on information or off), which indicates whether or not the dial 12 is pressed, to the main control device 30. Furthermore, the dial operation unit 10 outputs operation information (on information or off information), which indicates whether or not the switches 14A to 14C are depressed, to the main control device 30.

The dial operation unit 10 preferably further comprises a light emitting unit 16 and a backlight 18.

The light emitting unit 16 emits visible light with different colors from each other. For example, the light emitting unit 16 comprises at least two light emitting elements that emit visible light of different colors from each other. The light emitting element is, for example, a light emitting diode (LED). The details of the light emitting unit 16 will be described below.

The backlight 18 emits visible light toward the back surface of the switches 14A to 14C. For example, the backlight 18 comprises a light emitting element that emits light toward the back surface of the switch 14A, a light emitting element that emits light toward the back surface of the switch 14B, and a light emitting element that emits light toward the back surface of the switch 14C. Or, for example, the backlight 18 comprises a light emitting element that emits light toward the back surface of the switch 14A, and a light emitting element that emits light toward the back surface of the switch 14B and the back surface of the switch 14C. The light emitting element is, for example, a LED. The details of the backlight 18 will be described below.

The dial operation unit 10 may comprise one of the light emitting unit 16 and the backlight 18.

The operation unit 20 further comprises a display control device 26 and a sound output unit 28. The display control device 26 controls the display unit 22. The display control device 26 is, for example, an ECU. The sound output unit 28 outputs sound. The sound output unit 28 is, for example, a speaker or a buzzer.

Specifically, the display control device 26 comprises a control unit 261 and a storage unit 263. The control unit 261 includes a processor such as a central processing unit (CPU). The storage unit 263 includes a storage device and stores data and a computer program. Specifically, the storage unit 263 includes a main storage device, such as a semiconductor memory, and an auxiliary storage device, such as a semiconductor memory, a solid state drive, and/or a hard disk drive. The storage unit 263 may comprise a removable medium. The storage unit 263 corresponds to an example of a non-transitory computer-readable storage medium.

The control unit 261 outputs various information entered or set according to the operation of the screen displayed on the display unit 22 to the main control device 30.

The control unit 261 comprises a display control unit 265. Specifically, the processor of the control unit 261 executes the computer program stored in the storage device of the storage unit 263, thereby functioning as the display control unit 265. The display control unit 265 controls the display unit 22. For example, the display control unit 265 controls the screen displayed on the display unit 22 according to the operation information (on information or off information) indicating whether or not the push buttons 24A to 24F are depressed. The details of the display control unit 265 will be described below.

The main control device 30 controls the dial operation unit 10, the operation unit 20, and the engine unit 500. The main control device 30 is, for example, an ECU.

Specifically, the main control device 30 comprises a control unit 32 and a storage unit 34. The control unit 32 includes a processor such as a CPU. The storage unit 34 includes a storage device and stores data and a computer program. The hardware configuration of the storage unit 34 is similar to that of the storage unit 263, for example.

The control unit 32 acquires the rotational operation information and the pressing operation information of the dial 12 from the dial operation unit 10, as well as acquiring the operation information of the switches 14A to 14C. The control unit 32 also acquires various information entered or set according to the operation of the screen displayed on the display unit 22 from the control unit 261 of the display control device 26.

The control unit 32 comprises an allocation unit 320. Specifically, the processor of the control unit 32 executes the computer program stored in the storage device of storage unit 34, thereby functioning as the allocation unit 320.

The allocation unit 320 selectively allocates to the dial 12 either the engine operational function to adjust the rotation speed of the engine 501, or the screen operational function to perform an operation in accordance with the screen displayed on the display unit 22. Therefore, according to this embodiment, it is possible to improve the operability of the operating device 1 by means of the dial 12 while suppressing the increase in the number of parts of the operating device 1 as compared with the case where a dedicated dial to adjust the rotation speed of the engine 501 and a dedicated dial to perform an operation in accordance with the screen displayed on the display unit 22 are provided respectively.

Specifically, the allocation unit 320 switches the functions allocated to dial 12 between the engine operational function and the screen operational function based on the operation information of the allocation change switch 14A. Then, the allocation unit 320 stores information indicating that the engine operational function is allocated to the dial 12 or information indicating that the screen operational function is allocated to the dial 12 in a specified area of the storage unit 34 (hereinafter referred to as "specified area MEM1").

The fact that the information indicating that the engine operational function is allocated to the dial 12 is stored in the specified area MEM1 means that the adjustment of the rotation speed of the engine 501 by the dial 12 is permitted and the operation of the screen of the display unit 22 by the dial 12 is prohibited.

On the other hand, the fact that the information indicating that the screen operational function is allocated to the dial 12 is stored in the specified area MEM1 means that the adjustment of the rotation speed of the engine 501 by the dial 12 is prohibited and the operation of the screen of the display unit 22 by the dial 12 is permitted.

In the case where the screen operational function is allocated to the dial 12, the allocation unit 320 receives the operation information of the initial screen switch 14B and the return switch 14C as valid information. Therefore, according to this embodiment, in the case where the screen operational function is allocated to the dial 12, the dial operation unit 10 can be given the same operability as the push buttons 24A to 24F of the operation unit 20.

In the case where the screen operational function is allocated to the dial 12, the allocation unit 320 receives the rotational operation information and the pressing operation information of the dial 12 as valid information.

On the other hand, in the case where the engine operational function is allocated to the dial 12, the allocation unit 320 does not receive the operation information of the initial screen switch 14B and the return switch 14C as invalid information. Thus, in the case where the engine operational function is allocated to the dial 12, the initial screen switch 14B and the return switch 14C related to the operation of the screen of the display unit 22 are disabled, so that it is possible to indicate to the operator that the engine operational function is allocated to the dial 12.

In the case where the engine operational function is allocated to the dial 12, the allocation unit 320 receives the rotation operation information of the dial 12 as valid information, and does not receive the pressing operation information of the dial 12 as invalid information.

In addition, regardless of the function allocated to the dial 12, the allocation unit 320 receives the operation information of the allocation change switch 14A as valid information.

In the case where the engine operational function is allocated to the dial 12, the display control unit 265 of the operation unit 20 may operate so as not to receive the operation information of the initial screen switch 14B and the return switch 14C, as well as the pressing operation information of the dial 12, as invalid information.

In addition, the allocation unit 320 allocates the engine operational function to the dial 12 in response to turning on of a key switch for starting up the engine 501. Thus, according to this embodiment, the operator can adjust the rotation speed of the engine 501 immediately after turning on the key switch by operating the dial 12. As a result, the operator convenience can be improved.

In addition, the allocation unit 320 controls the engine unit 500. Specifically, in the case where the engine operational function is allocated to the dial 12, the allocation unit 320 controls the engine control device 503 to adjust (set) the rotation speed of the engine 501 to a rotation speed in accordance with the rotational operation information of the dial 12. As a result, the engine control device 503 adjusts (sets) the rotation speed of the engine 501 to a rotation speed in accordance with the rotational operation information of the dial 12.

The allocation unit 320 also controls the operation unit 20. Specifically, in the case where the screen operational function is allocated to the dial 12, the allocation unit 320 outputs the information indicating that the screen operational function is allocated to the dial 12, the rotation operation information and the pressing operation information of the dial 12, as well as the operation information of the initial screen switch 14B and the return switch 14C to the control unit 261 of the display control device 26. Then, the display control unit 265 of the control unit 261 controls the screen displayed on the display unit 22 based on the rotational operation information and the pressing operation information of the dial 12, as well as the operation information of the initial screen switch 14B and the return switch 14C. In addition, the display control unit 265 controls the screen displayed on the display unit 22 based on the operation information of the push buttons 24A to 24F.

On the other hand, in the case where the engine operational function is allocated to the dial 12, the allocation unit 320 outputs the information indicating that the engine operational function is allocated to the dial 12 to the control unit 261 of the display control device 26. In this case, the allocation unit 320 does not output the rotational operation information and the pressing operation information of the dial 12, as well as the operation information of the initial screen switch 14B and the return switch 14C to the control unit 261 of the display control device 26. In the case where the engine operational function is allocated to the dial 12, the display control unit 265 of the control unit 261 controls the screen displayed on the display unit 22 based on the operation information of the push buttons 24A to 24F.

The control unit 261 of the display control device 26 stores the information indicating that the engine operational function is allocated to the dial 12 or the information indicating that the screen operational function is allocated to the dial 12 in a specified area of the storage unit 263 (hereinafter referred to as "specified area MEM2").

Next, a notification of the functions allocated to the dial 12 will be described with reference to FIGS. 2(a) and 4. The light emitting unit 16 is controlled by the allocation unit 320, and notifies the function allocated to the dial 12 at the dial 12 in a recognizable manner by vision. Specifically, the light emitting unit 16 is controlled by the allocation unit 320, and emits visible light of different colors at a base end part 12A of the dial 12 in the case where the engine operational function is allocated to the dial 12 and in the case where the screen operational function is allocated to the dial 12. Thus, according to this embodiment, the operator can intuitively recognize the functions allocated to the dial 12. The light emitting unit 16 corresponds to an example of a "function notification unit".

For example, in the case where the engine operational function is allocated to the dial 12, the light emitting unit 16 is controlled by the allocation unit 320, and emits visible light of a first color (e.g., white) from a gap between the base end part 12A of the dial 12 and the base member 17. On the other hand, for example, in the case where the screen operational function is allocated to the dial 12, the light emitting unit 16 is controlled by the allocation unit 320, and emits visible light of a second color (e.g., blue) from the gap between the base end part 12A of the dial 12 and the base member 17.

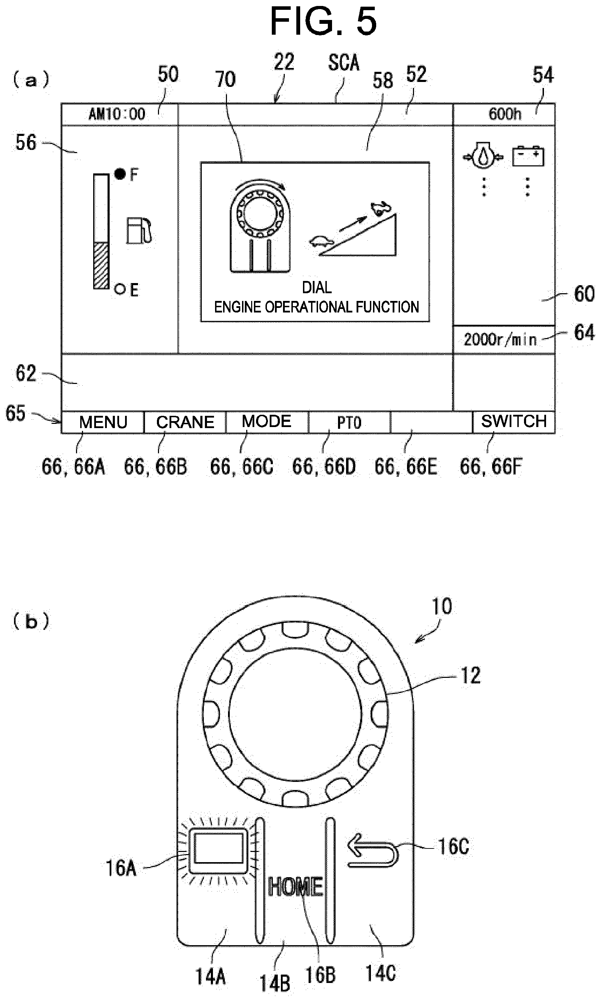

Next, the operation of the operating device 1 in the case where the engine operational function is allocated to the dial 12 will be described with reference to FIGS. 5 (a) and (b). FIG. 5(a) is a figure illustrating a first function notification image 70 displayed according to a fact that the engine operational function is allocated to the dial 12. FIG. 5(b) is a figure illustrating a lighting state of the dial operation unit 10 in the case where the engine operational function is allocated to the dial 12.

As illustrated in FIG. 5(a), the display control unit 265 illustrated in FIG. 4 controls the display unit 22 to temporarily display the first function notification image 70 according to a fact that the engine operational function is allocated to the dial 12. As a result, the display unit 22 temporarily displays the first function notification image 70. The first function notification image 70 indicates that the engine operational function is allocated to the dial 12. The first function notification image 70 corresponds to an example of "first function notification information". According to this embodiment, the operator can easily recognize that the function allocated to the dial 12 is the engine operational function by viewing the first function notification image 70. The display control unit 265 corresponds to an example of a "function notification unit".

In addition, the operator can also view the image located behind the first function notification image 70 again after the first function notification image 70 is temporarily displayed. In particular, in the example in FIG. 5(a), the display unit 22 temporarily displays the first function notification image 70 in the camera image display area 58. Thus, the operator can view the image displayed in the camera image display area 58 again after the first function notification image 70 is temporarily displayed.

In the example in FIG. 5(a), although the first function notification image 70 is displayed on the initial screen SCA, but it is similarly that, on other screens, the display unit 22 temporarily displays the first function notification image 70 according to a fact that the engine operational function is allocated to the dial 12.

As illustrated in FIG. 5(b), the backlight 18 illustrated in FIG. 4 is controlled by the allocation unit 320, emits visible light toward the back surface of the icon 16A of the allocation change switch 14A to light the icon 16A, thereby indicating that the engine operational function is allocated to the dial 12. On the other hand, the backlight 18 is controlled by the allocation unit 320, and does not emit visible light toward the back surface of the icon 16B of the initial screen switch 14B and the back surface of the icon 16C of the return switch 14C. Therefore, in the case where the engine operational function is allocated to the dial 12, only the icon 16A of the allocation change switch 14A lights up. As a result, the operator can intuitively recognize that the function allocated to the dial 12 is the engine operational function. The backlight 18 corresponds to an example of a "function notification unit".

In the example in FIG. 5(b), the backlight 18 emits light to the back surface of the icon 16A, which is arranged next to the dial 12, thereby notifying the function allocated to the dial 12 in a recognizable manner by vision. In other words, the backlight 18 notifies, next to the dial 12, the function allocated to the dial 12 in a recognizable manner by vision. Therefore, since the dial 12 and the notification position (i.e., the position of icon 16A) are close to each other, the operator can easily recognize that the notification about dial 12 is being made.

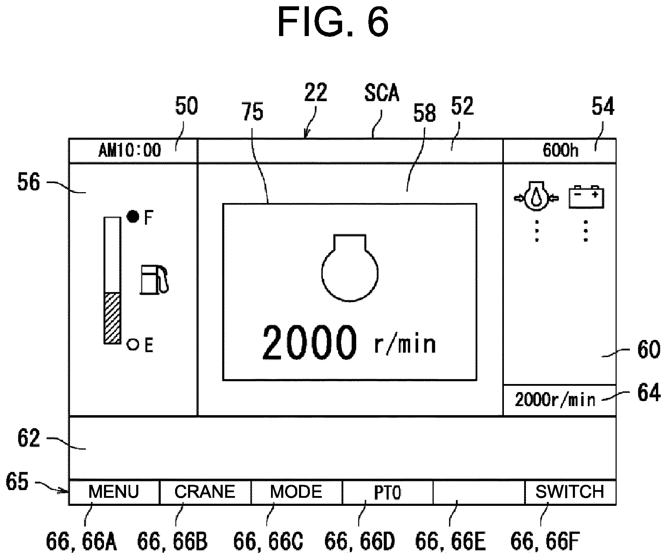

Next, a notification of the rotation speed of the engine 501 will be described with reference to FIG. 6. FIG. 6 is a figure illustrating the rotation speed image 75 displayed on the display unit 22 in the case where the engine operational function is allocated to the dial 12. As illustrated in FIG. 6, in the case where the engine operational function is allocated to the dial 12, the display unit 22 is controlled by the display control unit 265 and temporarily displays the rotation speed image 75 according to the rotational operation of the dial 12. The rotation speed image 75 illustrates the rotation speed of the engine 501. According to this embodiment, by viewing the rotation speed image 75, the operator can easily confirm whether or not the rotation speed of the engine 501 is set to the desired rotation speed by the operation with the dial 12. The rotation speed image 75 corresponds to an example of "rotation speed information".

In addition, the operator can view the image located behind the rotation speed image 75 again after the rotation speed image 75 is temporarily displayed. In particular, in the example in FIG. 6, the display unit 22 temporarily displays the rotation speed image 75 in the camera image display area 58. Thus, the operator can view the image displayed in the camera image display area 58 again after the rotation speed image 75 is temporarily displayed.

In the example in FIG. 6, although the rotation speed image 75 is displayed on the initial screen SCA, but it is similarly that, on other screens, the display unit 22 temporarily displays the rotation speed image 75 according to the rotational operation of the dial 12 in the case where the engine operational function is allocated to the dial 12.

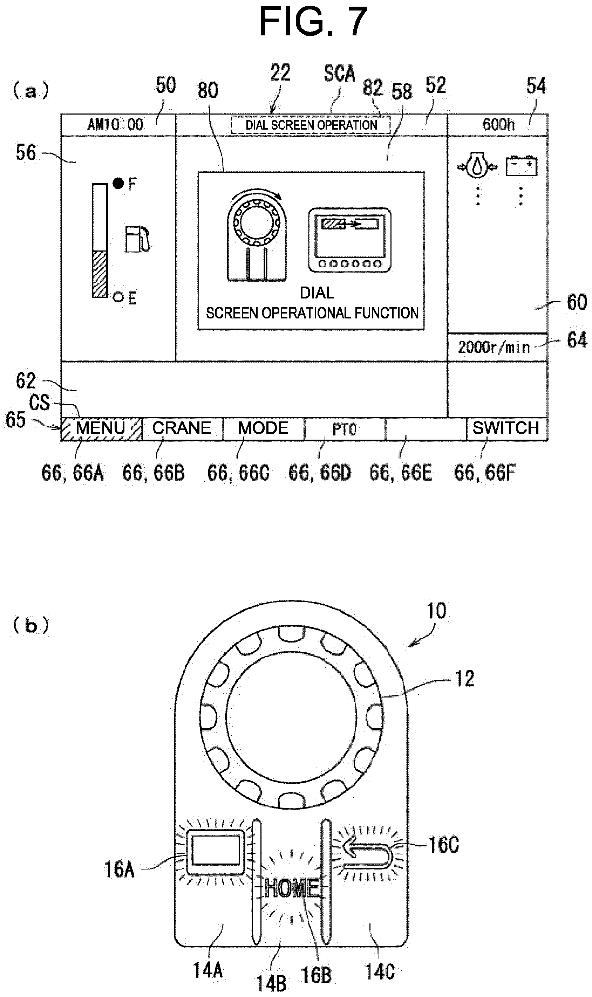

Next, the operation of the operating device 1 in the case where the screen operational function is allocated to the dial 12 will be described with reference to FIGS. 7(a) and (b). FIG. 7(a) is a figure illustrating a second function notification image 80 displayed according to a fact that the screen operational function is allocated to the dial 12. FIG. 7(b) is a figure illustrating a lighting state of the dial operation unit 10 in the case where the screen operational function is allocated to the dial 12.

As illustrated in FIG. 7(a), the display control unit 265 illustrated in FIG. 4 controls the display unit 22 to temporarily display the second function notification image 80 according to a fact that the screen operational function is allocated to the dial 12. As a result, the display unit 22 temporarily displays the second function notification image 80. The second function notification image 80 indicates that the screen operational function is allocated to the dial 12. The second function notification image 80 corresponds to an example of "second function notification information". According to this embodiment, the operator can easily recognize that the function allocated to the dial 12 is the screen operational function by viewing the second function notification image 80.

In addition, the operator can view the image located behind the second function notification image 80 again after the second function notification image 80 is temporarily displayed. In particular, in the example in FIG. 7(a), the display unit 22 temporarily displays the second function notification image 80 in the camera image display area 58. Thus, the operator can view the image displayed in the camera image display area 58 again after the second function notification image 80 is temporarily displayed.

In the example in FIG. 7(a), although the second function notification image 80 is displayed on the initial screen SCA, but it is similarly that, on other screens, the display unit 22 temporarily displays the second function notification image 80 according to a fact that the screen operational function is allocated to the dial 12.

In the case where the screen operational function is allocated to the dial 12, the display unit 22 is controlled by the display control unit 265, and displays the cursor CS in one of the selected sections 66A to 66F of the initial screen SCA. In FIG. 7(a), the cursor CS is indicated by hatching. In addition, the display unit 22 is controlled by the display control unit 265 and moves the cursor CS on the selected sections 66A to 66F based on the rotational operation information of the dial 12. Then, in a case where the pressing operation information of the dial 12 indicates that the dial 12 is pressed, the display control unit 265 confirms the selection of the selected section 66 where the cursor CS is located. Furthermore, the display control unit 265 controls the display unit 22 to display the screen in accordance with the selected section 66 for which the selection is confirmed.

Furthermore, the display control unit 265 controls the display unit 22 so that a function notification image 82, which indicates that the screen operational function is allocated to the dial 12, is displayed for a period of time during which the screen operational function is allocated to the dial 12 by controlling the display unit 22. Thus, the display unit 22 displays the function notification image 82 for the period of time during which the screen operational function is allocated to the dial 12. As a result, according to this embodiment, the operator can easily recognize the function allocated to the dial 12 for the period of time during which the screen operational function is allocated to the dial 12. In the example in FIG. 7(a), the display unit 22 is controlled by the display control unit 265 and displays the function notification image 82 in the allocated function display area 52. The function notification image 82 corresponds to an example of "function notification information".

In addition, the display control unit 265 may control the display unit 22 so that a function notification image, which indicates that the engine operational function is allocated to the dial 12, is displayed for a period of time during which the engine operational function is allocated to the dial 12 by controlling the display unit 22.

As illustrated in FIG. 7(b), the backlight 18 illustrated in FIG. 4 is controlled by the allocation unit 320, emits visible light toward the back surface of the icon 16A of the allocation change switch 14A, the back surface of the icon 16B of the initial screen switch 14B, and the back surface of the icon 16C of the return switch 14C to light the icons 16A to 16C, thereby indicating that the screen operational function is allocated to the dial 12. Therefore, in the case where the screen operational function is allocated to the dial 12, all icons 16A to 16C will light up. As a result, the operator can intuitively recognize that the function allocated to the dial 12 is the screen operational function.

In the example in FIG. 7(b), the backlight 18 emits light to the back surfaces of the icons 16A to 16C, which are arranged next to the dial 12, thereby notifying the function allocated to the dial 12 in a recognizable manner by vision. In other words, the backlight 18 notifies, next to the dial 12, the function allocated to the dial 12 in a recognizable manner by vision. Therefore, since the dial 12 and the notification position (i.e., position of icons 16A to 16C) are close to each other, the operator can easily recognize that the notification about dial 12 is being made.

As described above with reference to FIG. 4, FIG. 5(a), FIG. 5(b), FIG. 7(a), and FIG. 7(b), according to this embodiment, the display control unit 265, the light emitting unit 16, and the backlight 18 notify which of the engine operational function and the screen operational function is allocated to the dial 12 in a recognizable manner by vision. Thus, according to this embodiment, the operator can easily recognize the function allocated to the dial 12. Not only the display control unit 265, the light emitting unit 16, and the backlight 18, but also the display unit 22 can also be considered as a "function notification unit".

In addition, the sound output unit 28 illustrated in FIG. 4 is controlled by the allocation unit 320, and may notify which of the engine operational function and the screen operational function is allocated to the dial 12 in a recognizable manner by sound. In this case, the operator can also easily recognize the function allocated to the dial 12.

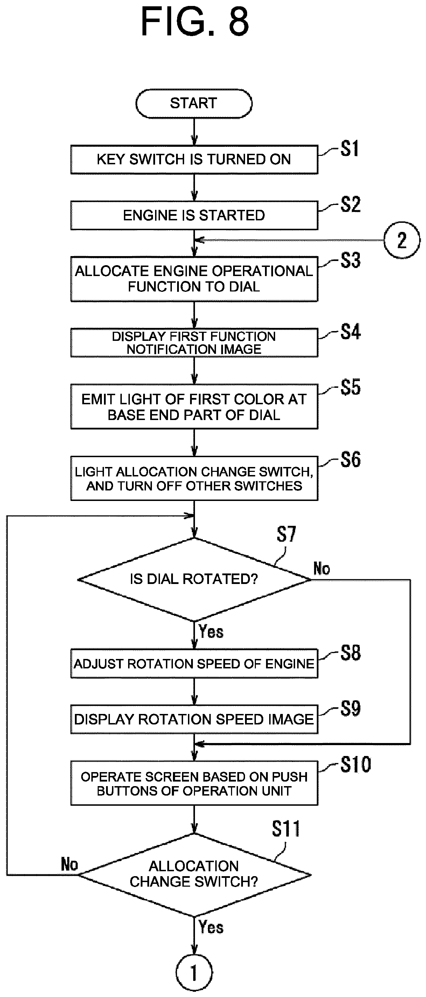

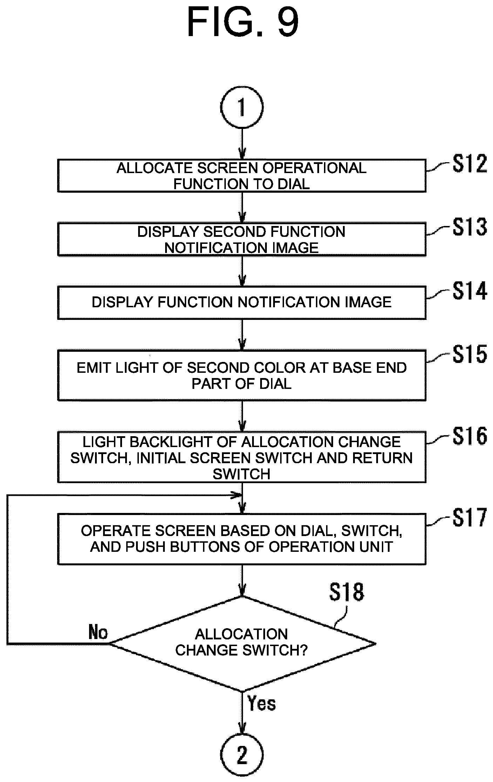

Next, the operation control method according to the embodiment will be described with reference to FIG. 4, FIG. 8, and FIG. 9. FIGS. 8 and 9 are flowcharts illustrating the operation control method executed in the work vehicle 100 (operating device 1). As illustrated in FIGS. 8 and 9, the operation control method includes steps S1 to S18.

As illustrated in FIG. 8, in step S1, the key switch of the work vehicle 100 is turned on.

Next, in step S2, the engine 501 is started.

Next, in step S3, the allocation unit 320 allocates the engine operational function to the dial 12.

Next, in step S4, the display unit 22 temporarily display the first function notification image 70 (FIG. 5(a)) indicating that the engine operational function is allocated to the dial 12.

Next, in step S5, the light emitting unit 16 emits, at the base end part 12A of the dial 12, visible light of a first color indicating that the engine operational function is allocated to the dial 12.

Next, in step S6, the backlight 18 lights the allocation change switch 14A, while turning off the initial screen switch 14B and the return switch 14C.

Next, in step S7, the allocation unit 320 determines whether or not the dial 12 is rotated based on the rotational operation information of the dial 12. Step S7 corresponds to an example of a "step where the dial receives the rotational operation".

When it is determined in step S7 that the dial 12 is not rotated, the process proceeds to step S10.

On the other hand, when it is determined in step S7 that the dial 12 is rotated, the process proceeds to step S8.

In step S8, the allocation unit 320, via the engine control device 503 adjust the rotation speed of the engine 501 according to the rotational operation information of the dial 12.

Next, in step S9, the display unit 22 temporarily displays the rotation speed image 75 (FIG. 6) indicating the rotation speed of the engine 501.

Next, in step S10, the display control unit 265 operates (controls) the screen of display unit 22 based on the operation information of push buttons 24A to 24F of the operation unit 20.

Next, in step S11, the allocation unit 320 determines whether or not the allocation change switch 14A is depressed based on the operation information of the allocation change switch 14A.

When it is determined in step S11 that allocation change switch 14A is not depressed, the process proceeds to step S7.

On the other hand, when it is determined in step S11 that the allocation change switch 14A is depressed, the process proceeds to step S12 in FIG. 9.

As illustrated in FIG. 9, in step S12, the allocation unit 320 allocates the screen operational function to the dial 12.

Next, in step S13, the display unit 22 temporarily displays the second function notification image 80 (FIG. 7(a)) indicating that the screen operational function is allocated to the dial 12.

Next, in step S14, the display unit 22 continuously displays the function notification image 82 (FIG. 7(a)) indicating that the screen operational function is allocated to the dial 12 for the period of time during which the screen operational function is allocated to the dial 12.

Next, in step S15, the light emitting unit 16 emits, at the base end part 12A of the dial 12, visible light of a second color indicating that the screen operational function is allocated to the dial 12.

Next, in step S16, the backlight 18 lights the allocation change the allocation change switch 14A, the initial screen switch 14B, and the return switch 14C.

Next, in step S17, the display control unit 265 operates (controls) the screen of the display unit 22 based on the rotational operation information and the pressing operation information of the dial 12, the operation information of the initial screen switch 14B, the operation information of the return switch 14C, as well as the operation information of the push buttons 24A to 24F. Step S17 corresponds to an example of a "step where the dial receives the rotational operation.

Next, in step S18, the allocation unit 320 determines whether or not the allocation change switch 14A is depressed based on the operation information of the allocation change switch 14A.

When it is determined in step S18 that the allocation change switch 14A is not depressed, the process proceeds to step S17.

On the other hand, when it is determined in step S18 that the allocation change switch 14A is depressed, the process proceeds to step S3 in FIG. 8.

As described above with reference to FIGS. 8 and 9, according to the operation control method of this embodiment, either the engine operational function to adjust the rotation speed of the engine 501, or the screen operational function to perform an operation in accordance with the screen displayed on the display unit 22 is selectively allocated to the dial 12 (steps S3 and S12). Therefore, by executing the operation control method in the work vehicle 100, it is possible to improve the operability of the operating device 1 by means of the dial 12 while suppressing the increase in the number of parts of the operating device 1 as compared with the case where a dedicated dial to adjust the rotation speed of the engine 501 and a dedicated dial to perform an operation in accordance with the screen displayed on the display unit 22 are provided respectively.

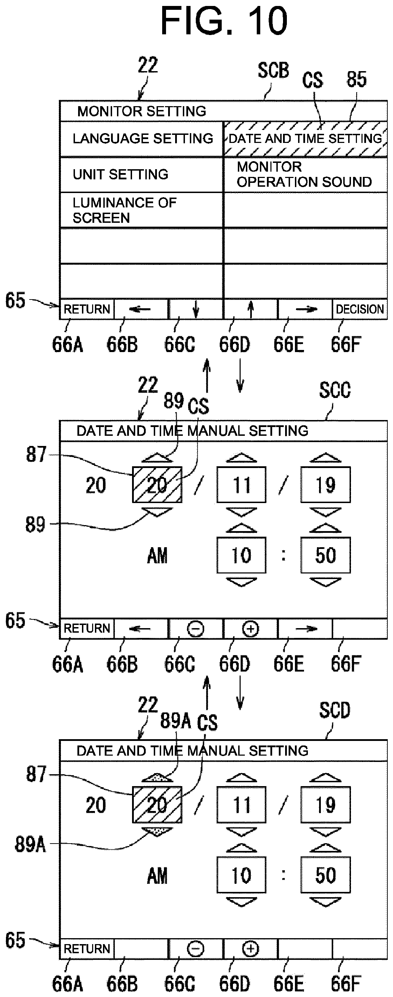

Next, an example of a screen transition in the display unit 22 will be described with reference to FIG. 4 and FIG. 10. FIG. 10 is a figure illustrating an example of a screen transition in the display unit 22.

As illustrated in FIG. 10, the display unit 22 is controlled by the display control unit 265 and displays a first setting screen SCB. The first setting screen SCB includes a plurality of item selection sections 85 and a cursor CS. In FIG. 10, the cursor CS is indicated by hatching. The item selection section 85 is an area for selecting an item to be set for the operation unit 20.

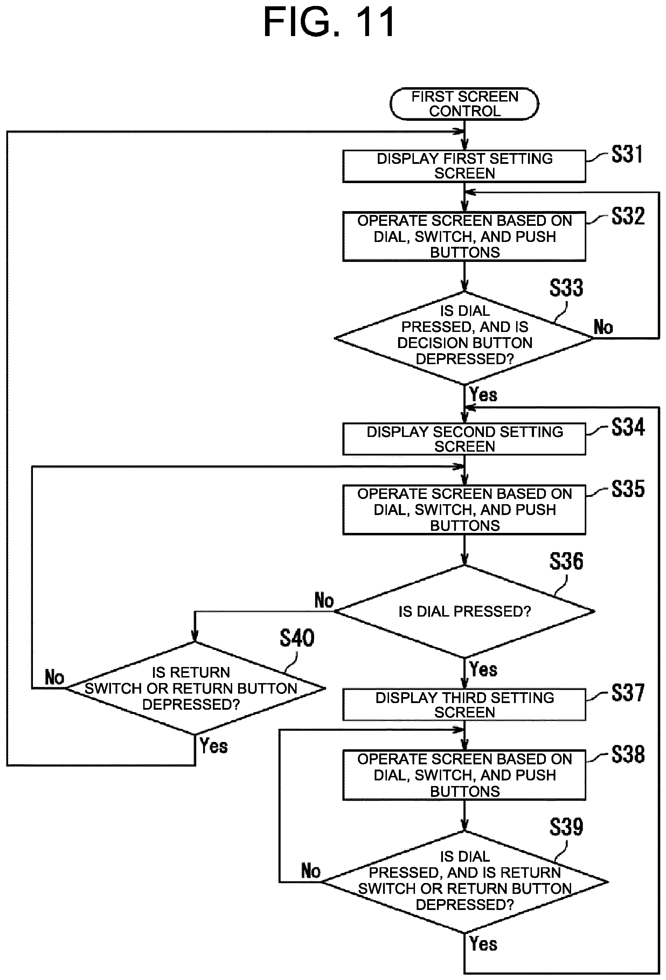

In the following description of FIG. 10 and FIG. 11 described below, the push button 24F (FIG. 3) corresponding to the selected section 66F that indicates "decision" may be described as a "decision button 24F", and the push button 24A (FIG. 3) corresponding to the selected section 66A that indicates "return" may be described as a "return button 24A".

First, the case in which the screen operational function is allocated to the dial 12 will be described. In this case, for simplicity of description, only operations with the dial operation unit 10 will be focused on primarily. Specifically, the display unit 22 is controlled by the display control unit 265 and operates as follows.

In other words, the display unit 22 moves the cursor CS on the plurality of item selection sections 85 according to the rotational operation of the dial 12. In the example in FIG. 10, the cursor CS is positioned at the item selection section 85 indicating "date and time setting". Thus, the item selection section 85 indicating "date and time setting" is being selected.

Then, when the dial 12 is pressed, a selection of the item selection section 85 is confirmed. As a result, the display unit 22 changes the first setting screen SCB to a second setting screen SCC in accordance with the item indicated by the item selection section 85. In other words, the display unit 22 transits from the first setting screen SCB to the second setting screen SCC.

The second setting screen SCC includes a plurality of numeric input sections 87, a plurality of icons 89, and a cursor CS. The numeric input section 87 is an area for entering a numerical value. A pair of icons 89 is arranged for each of the numeric input sections 87.

The display unit 22 moves the cursor CS on the plurality of numeric input sections 87 according to the rotational operation of the dial 12. In the example in FIG. 10, the cursor CS is positioned at the numeric input section 87 where "20" is entered. Thus, the numeric input section 87, where "20" is entered, is being selected.

On the other hand, in the second setting screen SCC, the display unit 22 does not execute a change of the numerical value in the numeric input section 87 by the rotational operation of the dial 12. The icon 89 visually indicates that the numerical value in the numeric input section 87 cannot be changed by the rotational operation of the dial 12. In the second setting screen SCC, the rotational operation of the dial 12 is received only to select one numeric input section 87 from the plurality of numeric input sections 87.

Then, when the dial 12 is pressed, the display unit 22 changes the second setting screen SCC to a third setting screen SCD. In other words, the display unit 22 transits from the second setting screen SCC to the third setting screen SCD.

The configuration of the third setting screen SCD is the same as that of the second setting screen SCC. However, in the third setting screen SCD, the display unit 22 execute a change of the numerical value, in the selected numeric input section 87, by the rotational operation of the dial 12. In the third setting screen SCD, the pair of icons 89A sandwiching the selected numeric input section 87 visually indicates that the numerical value of the numeric input section 87 can be changed by the rotational operation of the dial 12.

In the third setting screen SCD, the display unit 22 can also execute a change of the numerical value, in the selected numeric input section 87, according to the operation of the push buttons 24C and 24D (FIG. 3) corresponding to the selected sections 66C and 66D.

Then, when the dial 12 is pressed or the return switch 14C of the dial operation unit 10 (FIG. 2(b)) is depressed, the display unit 22 changes the third setting screen SCD to the second setting screen SCC. In other words, the display unit 22 transits from the third setting screen SCD to the second setting screen SCC.

Furthermore, when the return switch 14C of the dial operation unit 10 is depressed, the display unit 22 changes the second setting screen SCC to the first setting screen SCB. In other words, the display unit 22 transits from the second setting screen SCC to the first setting screen SCB.

Next, the case in which the engine operational function is allocated to the dial 12 will be described. In this case, the display unit 22 is controlled by the display control unit 265 and operates as follows.

The display unit 22 moves the cursor CS on the plurality of item selection sections 85 according to the operation of the push buttons 24B to 24E (FIG. 3) corresponding to the selected sections 66B to 66E.

Then, when the decision button 24F is depressed, a selection of the item selection section 85 is confirmed. As a result, the display unit 22 changes the first setting screen SCB to the second setting screen SCC. In other words, the display unit 22 transits from the first setting screen SCB to the second setting screen SCC.

On the second setting screen SCC, the display unit 22 moves the cursor CS on the plurality of numeric input sections 87 according to the operation of the push buttons 24B and 24E (FIG. 3) corresponding to the selected sections 66B and 66E.

In addition, in the second setting screen SCC, the display unit 22 execute a change of the numerical value, in the selected numeric input section 87, according to the operation of the push buttons 24C and 24D (FIG. 3) corresponding to the selected sections 66C and 66D. Therefore, in the case where the engine operational function is allocated to the dial 12, the display unit 22 does not execute a change from the second setting screen SCC to the third setting screen SCD. In other words, in the case where the engine operational function is allocated to the dial 12, the display unit 22 does not display the third setting screen SCD.

Then, when the return button 24A is depressed, the display unit 22 changes the second setting screen SCC to the first setting screen SCB. In other words, the display unit 22 transits from the second setting screen SCC to the first setting screen SCB.

Note that even in the case where the screen operational function is allocated to the dial 12, the push buttons 24A to 24F (FIG. 3) have, on the first setting screen SCB and the second setting screen SCC, the same functions as in the case where the engine operational function is allocated to the dial 12, and the display unit 22 displays screens according to the operation of the push buttons 24A to 24F.

As described above with reference to FIG. 10, according to this embodiment, in the case where the screen operational function is allocated to the dial 12, during a period when the second setting screen SCC is displayed for inputting or setting information (hereinafter referred to as "information F1"), the display unit 22 changes the second setting screen SCC to the third setting screen SCD for entering or setting the information F1 according to a fact that the dial 12 receives a pressing operation. On the other hand, in the case where the engine operational function is allocated to the dial 12, a change from the second setting screen SCC to the third setting screen SCD is not executed. The second setting screen SCC corresponds to an example of "a first screen" and the third setting screen SCD corresponds to an example of "a second screen".

In other words, in the case where the screen operational function is allocated to the dial 12, as compared with the case where the engine operational function is allocated to the dial 12, a dedicated third setting screen SCD is additionally provided for entering or setting the information F1. Therefore, even in a case where the degree of freedom of operation of the dial operation unit 10 is smaller than the degree of freedom of operation of the operation unit 20, at least the second setting screen SCC can be shared in the case where the engine operational function is allocated to the dial 12 and in the case where the screen operational function is allocated to the dial 12. As a result, the operability of the screen by the operator can be improved.

Specifically, in the example in FIG. 2(b), the degree of freedom of operation of the dial operation unit 10 is "4". In other words, the degree of freedom of operation of the dial operation unit 10 includes a clockwise rotational operation of the dial 12, a counterclockwise rotational operation of the dial 12, a pressing operation of the dial 12, and a depressing operation of the return switch 14C. In the example in FIG. 3, the degree of freedom of operation of the operation unit 20 is "6". In other words, the degree of freedom of operation of the operation unit 20 includes respective depressing operations of the six push buttons 24A to 24F. In this embodiment, the fact that the degree of freedom of operation of the dial operation unit 10 is smaller than the degree of freedom of operation of the operation unit 20, is compensated by the fact that the third setting screen SCD is additionally provided in the case where the screen operational function is allocated to the dial 12.

Next, a first screen control method in a case of performing a screen transition illustrated in FIG. 10 will be described with reference to FIG. 4, FIG. 10, and FIG. 11. FIG. 11 is a flowchart illustrating the first screen control method executed in the work vehicle 100 (operating device 1). The first screen control method is a screen control method in the case where the screen operational function is allocated to the dial 12. For simplicity of description, the allocation change switch 14A and the initial screen switch 14B are not operated. As illustrated in FIG. 11, the first screen control method includes steps S31 to S39.

In step S31, the display unit 22 is controlled by the display control unit 265 and displays the first setting screen SCB.

Next, in step S32, the display control unit 265 operates (controls) the first setting screen SCB displayed on the display unit 22 based on the rotational operation information and the pressing operation information of the dial 12, the operation information of the return switch 14C, as well as the operation information of the push buttons 24A to 24F.

Next, in step S33, the display control unit 265 determines whether or not the dial 12 is pressed based on the pressing operation information of the dial 12. In addition, the display control unit 265 determines whether or not the decision button 24F is depressed based on the operation information of the decision button 24F.

When a negative determination is made in step S33, the process proceeds to step S32. The negative determination indicates that it is determined that the dial 12 is not pressed and the decision button 24F is not depressed.

On the other hand, when a positive determination is made in step S33, the process proceeds to step S34. The positive determination indicates that it is determined that the dial 12 is pressed or the decision button 24F is pressed.

In step S34, the display unit 22 is controlled by the display control unit 265 and displays the second setting screen SCC.

Next, in step S35, the display control unit 265 operates (controls) the second setting screen SCC displayed on the display unit 22 based on the rotational operation information and the pressing operation information of the dial 12, the operation information of the return switch 14C, as well as the operation information of the push buttons 24A to 24E.

Next, in step S36, the display control unit 265 determines whether or not the dial 12 is pressed based on the pressing operation information of the dial 12.

When it is determined in step S36 that the dial 12 is not pressed, the process proceeds to step S40.

In step S40, the display control unit 265 determines whether or not the return switch 14C or the return button 24A is depressed based on the operation information of the return switch 14C and the return button 24A.

When it is determined in step S40 that the return switch 14C and the return button 24A are not depressed, the process proceeds to step S35.

On the other hand, when it is determined in step S40 that the return switch 14C or the return button 24A is depressed, the process proceeds to step S31.

When it is determined in step S36 that the dial 12 is pressed, the process proceeds to step S37.

In step S37, the display unit 22 is controlled by the display control unit 265 and displays the third setting screen SCD.

Next, in step S38, the display control unit 265 operates (controls) the third setting screen SCD displayed on the display unit 22 based on the rotational operation information and the pressing operation information of the dial 12, the operation information of the return switch 14C, as well as the operation information of the push buttons 24A, 24C, and 24D.

Next, in step S39, the display control unit 265 determines whether or not the dial 12 is pressed based on the pressing operation information of the dial 12. In addition, the display control unit 265 determines whether or not the return switch 14C or the return button 24A is depressed based on the operation information of the return switch 14C and the return button 24A.

When a negative determination is made in step S39, the process proceeds to step S38. The negative determination indicates that it is determined that the dial 12 is not pressed and that the return switch 14C and the return button 24A are not depressed.

On the other hand, when a positive determination is made in step S39, the process proceeds to step S34. The positive determination indicates that it is determined that the dial 12 is pressed, the return switch 14C is depressed, or the return button 24A is depressed.

In the screen control method in the case where the engine operational function is allocated to the dial 12, steps S36 to S39 are not executed, and step S40 is executed after step S35. In this case, in the screen control method, the screen is not operated by the dial operation unit 10, but is operated only by the push buttons 24A to 24F.

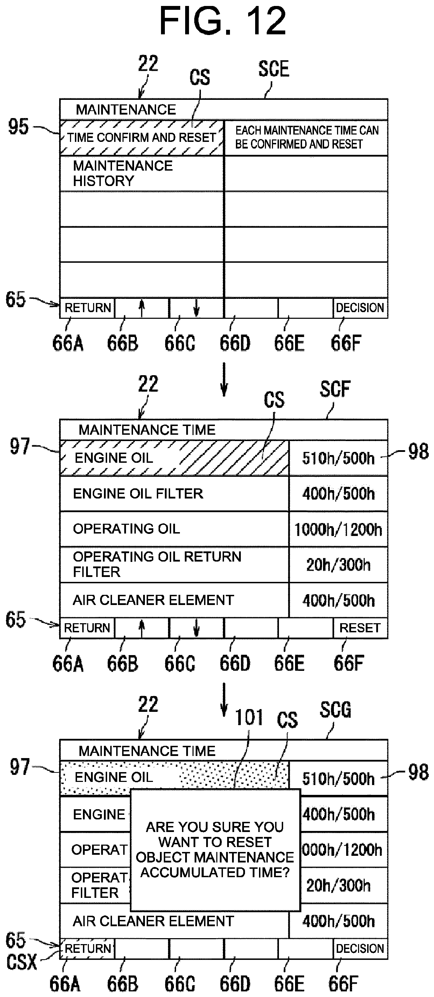

Next, another example of a screen transition in the display unit 22 will be described with reference to FIGS. 4 and 12. FIG. 12 is a figure illustrating another example of a screen transition in the display unit 22.

As illustrated in FIG. 12, the display unit 22 is controlled by the display control unit 265 and displays a first function operation screen SCE. The first function operation screen SCE is a screen that receives an operation to perform a function related to the work vehicle 100. The work vehicle 100 corresponds to an example of a "machine".

The first function operation screen SCE includes a plurality of item selection sections 95 and a cursor CS. In FIG. 12, the cursor CS is indicated by hatching. The item selection section 95 is an area for selecting a large item of functions related to the work vehicle 100.

In the following description of FIG. 12 and FIGS. 13 and 14 described below, the push button 24F (FIG. 3) corresponding to the selected section 66F that indicates "decision" or "reset" may be described as a "decision button 24F", and the push button 24A (FIG. 3) corresponding to the selected section 66A that indicates "return" may be described as a "return button 24A".

The case in which the screen operational function is allocated to the dial 12 will be described. In this case, for simplicity of description, only operations with the dial operation unit 10 will be focused on primarily. Specifically, the display unit 22 is controlled by the display control unit 265 and operates as follows.

In other words, the display unit 22 moves the cursor CS on the plurality of item selection sections 95 according to the rotational operation of the dial 12. In the example in FIG. 12, the cursor CS is positioned at the item selection section 95 indicating "time confirmation and reset". Thus, the item selection section 95 indicating "time confirmation and reset" is being selected.

Then, when the dial 12 is pressed, a selection of the item selection section 95 is confirmed. As a result, the display unit 22 changes the first function operation screen SCE to a second function operation screen SCF in accordance with the item indicated by the item selection section 95. In other words, the display unit 22 transits from the first function operation screen SCE to the second function operation screen SCF.

The second function operation screen SCF is a screen that receives an operation to perform a function related to the work vehicle 100. The second function operation screen SCF includes a plurality of item selection sections 97, a plurality of object display sections 98 and a cursor CS. The item selection section 97 is an area for selecting a small item of functions related to the work vehicle 100. The plurality of object display sections 98 is arranged in corresponding to the plurality of item selection sections 97 respectively. The object display section 98 displays an object for execution of the function indicated by the item selection section 97.

The display unit 22 moves the cursor CS on the plurality of item selection sections 97 according to the rotational operation of the dial 12. In the example in FIG. 12, the cursor CS is positioned at the item selection section 97 indicating "engine oil". Thus, the item selection section 97 indicating "engine oil" is being selected.

Then, when the dial 12 is pressed, the display unit 22 changes the second function operation screen SCF to a third function operation screen SCG. In other words, the display unit 22 transits from the second function operation screen SCF to the third function operation screen SCG.

The third function operation screen SCG is a screen that receives an operation to perform a function related to the work vehicle 100. The configuration of the third function operation screen SCG is the same as that of the second function operation screen SCF. However, the third function operation screen SCG includes a message image 101. In the example in FIG. 12, the message image 101 is displayed on the plurality of item selection sections 97 and the plurality of object display sections 98 in an overlapped manner. The message image 101 includes information indicating a content of the function to be performed and information indicating a final confirmation of the execution of the function.

On the third function operation screen SCG, the cursor CS is disabled. Therefore, the position of the cursor CS cannot be changed on the third function operation screen SCG.

In addition, the display unit 22 displays a cursor CSX in the selected area 65 of the third function operation screen SCG according to the transition from the second function operation screen SCF to the third function operation screen SCG. Specifically, the display unit 22 displays the cursor CSX in the selected section 66A to 66E different from the selected section 66F that indicates "decision" according to the transition from the second function operation screen SCF to the third function operation screen SCG. In the example in FIG. 12, the display unit 22 displays the cursor CSX in the selected section 66A indicating "return".

Then, on the third function operation screen SCG, the display unit 22 moves the cursor CSX on the plurality of selected sections 66A to 66F according to the rotational operation of the dial 12.

Furthermore, in a case where the cursor CSX is located at the selected section 66F that indicates "decision" and the selected section 66F is being selected, when the dial 12 is pressed, the control unit 261 of the display control device 26 or the control unit 32 of the main control device 30 performs the function indicated by the item selection sections 95 and 97. In the example in FIG. 12, the information displayed on the object display section 98 is changed (e.g., reset). The display unit 22 displays execution results of the function.

On the other hand, on the third function operation screen SCG, in a case where the cursor CSX is located at the selected section 66A that indicates "return", when the dial 12 is pressed, the display unit 22 changes the third function operation screen SCG to the second function operation screen SCF. In other words, the display unit 22 transits from the third function operation screen SCG to the second function operation screen SCF. Therefore, even if the operator repeatedly presses the dial 12 to transits from the first function operation screen SCE to the third function operation screen SCG at a stretch, it is possible to prevent the functions from being performed with excessive vigor. The "repeatedly press" means to repeat the pressing operation of the dial 12 continuously.

Note that even in the case where the screen operational function is allocated to the dial 12 or the engine operational function is allocated to the dial 12, on the first function operation screen SCE to the third function operation screen SCG, the operations in accordance with the selected sections 66A to 66F of the selected area 65 can be performed by the push buttons 24A to 24F.

As described above with reference to FIG. 12, according to this embodiment, the screen displayed on the display unit 22 is changed from the second function operation screen SCF to the third function operation screen SCG according to a pressing operation of the dial 12. During a period when the third function operation screen SCG is displayed on the display unit 22, in a case where the dial 12 receives a pressing operation again before receiving a rotational operation, the display unit 22 changes the third function operation screen SCG to the second function operation screen SCF. Therefore, it is possible to prevent the functions indicated by the item selection sections 95 and 97 from being performed by the operator's repeated pressing of the dial 12 with excessive vigor. The second function operation screen SCF corresponds to an example of a "third screen" and the third function operation screen SCG corresponds to an example of a "fourth screen".

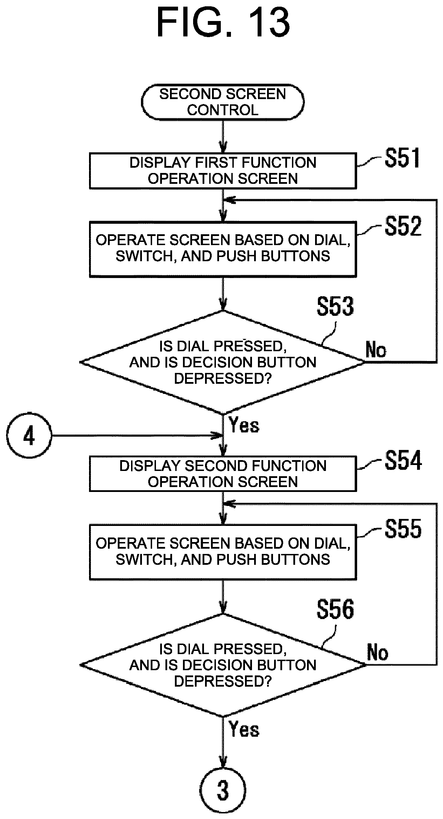

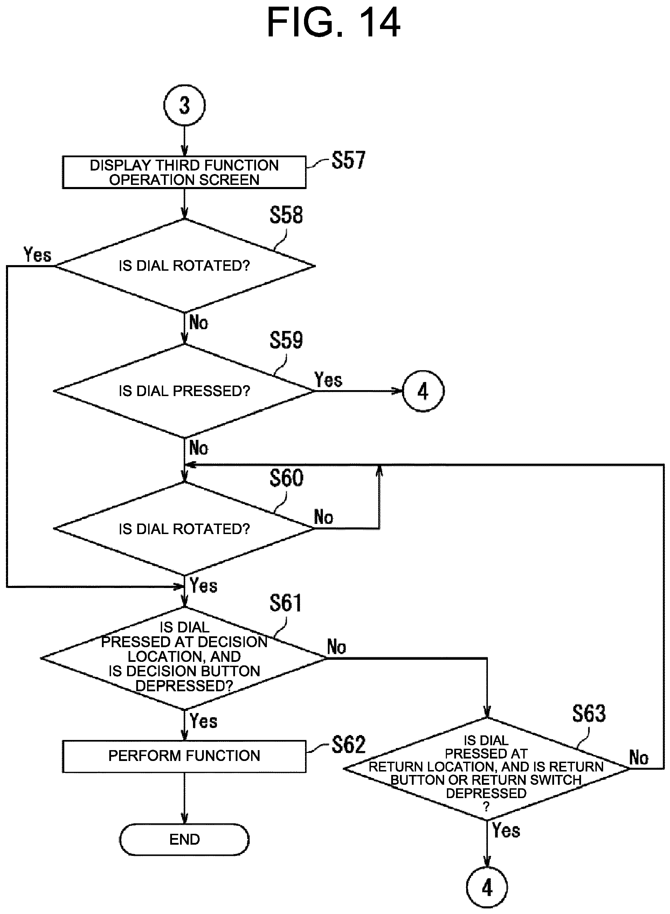

Next, a second screen control method in a case of performing a screen transition illustrated in FIG. 12 will be described with reference to FIG. 4 and FIGS. 12 to 14. FIGS. 13 and 14 are flowcharts illustrating the second screen control method executed in the work vehicle 100 (operating device 1). The second screen control method is a screen control method in the case where the screen operational function is allocated to the dial 12. For simplicity of description, the allocation change switch 14A and the initial screen switch 14B are not operated. As illustrated in FIGS. 13 and 14, the second screen control method includes steps S51 to S63.

In step S51, the display unit 22 is controlled by the display control unit 265 and displays the first function operation screen SCE.

Next, in step S52, the display control unit 265 operates (controls) the first function operation screen SCE displayed on the display unit 22 based on the rotational operation information and the pressing operation information of the dial 12, the operation information of the return switch 14C, as well as the operation information of the push buttons 24A to 24C, and 24F.

Next, in step S53, the display control unit 265 determines whether or not the dial 12 is pressed based on the pressing operation information of the dial 12. In addition, the display control unit 265 determines whether or not the decision button 24F is depressed based on the operation information of the decision button 24F.

When a negative determination is made in step S53, the process proceeds to step S52. The negative determination indicates that it is determined that the dial 12 is not pressed and the decision button 24F is not depressed.

On the other hand, when a positive determination is made in step S53, the process proceeds to step S54. The positive determination indicates that it is determined that the dial 12 is pressed or the decision button 24F is pressed.

In step S54, the display unit 22 is controlled by the display control unit 265 and displays the second function operation screen SCF.

Next, in step S55, the display control unit 265 operates (controls) the second function operation screen SCF displayed on the display unit 22 based on the rotational operation information and the pressing operation information of the dial 12, the operation information of the return switch 14C, as well as the operation information of the push buttons 24A to 24C, and 24F.

Next, in step S56, the display control unit 265 determines whether or not the dial 12 is pressed based on the pressing operation information of the dial 12. In addition, the display control unit 265 determines whether or not the decision button 24F is depressed based on the operation information of the decision button 24F.

When a negative determination is made in step S56, the process proceeds to step S55. The contents of the negative determination are the same as those of the negative determination in step S53.

On the other hand, when a positive determination is made in step S56, the process proceeds to step S57 in FIG. 14. The contents of the positive determination are the same as those of the positive determination in step S53.

As illustrated in FIG. 14, in step S57, the display unit 22 is controlled by the display control unit 265 and displays the third function operation screen SCG. In this case, the display unit 22 disables the cursor CS and displays the cursor CSX in the selected section 66A indicating "return".

Next, in step S58, the display control unit 265 determines whether or not the dial 12 is rotated based on the rotational operation information of the dial 12.

When it is determined in step S58 that the dial 12 is rotated, the process proceeds to step S61.

On the other hand, when it is determined in step S58 that the dial 12 is not rotated, the process proceeds to step S59.

In step S59, the display control unit 265 determines whether or not the dial 12 is pressed based on the pressing operation information of the dial 12.

When it is determined in step S59 that the dial 12 is pressed, the process proceeds to step S54 in FIG. 13. As a result, the screen displayed on the display unit 22 returns from the third function operation screen SCG to the second function operation screen SCF.

On the other hand, when it is determined in step S59 that the dial 12 is not pressed, the process proceeds to step S60.

In step S60, the display control unit 265 determines whether or not the dial 12 is rotated based on the rotational operation information of the dial 12.

When it is determined in step S60 that the dial 12 is not rotated, the process waits until the dial 12 is rotated.

On the other hand, when it is determined in step S60 that the dial 12 is rotated, the process proceeds to step S61.

In step S61, the display control unit 265 determines whether or not the dial 12 is pressed in a state where the cursor CSX is located in the selected section 66F indicating "decision". In addition, the display control unit 265 determines whether or not the decision button 24F corresponding to the selected section 66F indicating "decision" is depressed.

When a negative determination is made in step S61, the process proceeds to step S63. The contents of the negative determination are the same as those of the negative determination in step S53.

In step S63, the display control unit 265 determines whether or not the dial 12 is pressed in a state where the cursor CSX is located in the selected section 66A indicating "return". In addition, the display control unit 265 determines whether or not the return button 24A or the return switch 14C corresponding to the selected section 66A indicating "return" is depressed.

When a negative determination is made in step S63, the process proceeds to step S60. The negative determination indicates that it is determined that the dial 12 is not pressed and that the return button 24A and the return switch 14C are not depressed.

On the other hand, when a positive determination is made in step S63, the process proceeds to step S54 in FIG. 13. The positive determination indicates that it is determined that the dial 12 is pressed, the return button 24A is depressed, or the return switch 14C is depressed.

In addition, when a positive determination is made in step S61, the process proceeds to step S62. The contents of the positive determination are the same as those of the positive determination in step S53.

In step S62, the control unit 261 of the display control device 26 or the control unit 32 of the main control device 30 performs the function indicated by item selection sections 95 and 97. The display unit 22 is controlled by the display control unit 265 and displays the execution results of the function. The process is then terminated.

The embodiments and examples of the present invention have been described with reference to the drawings. However, the present invention is not limited to the embodiments described above, and can be performed in various aspects. For example, the following modifications (1) to (5) are allowed. The plurality of components disclosed in the above embodiments may be modified as appropriate.

The drawings are schematically shown with each component as a main subject in order to facilitate understanding of the present invention, and the thicknesses, the lengths, the numbers, the spacings, and so on of the illustrated components may be different from the actual ones due to the convenience of the drawings. In addition, it is needless to say that the configuration of each component shown in the above embodiments is merely an example and is not particularly limited, and various modifications may be made without substantially departing from the effect of the present invention.
(1) In FIGS. 8 and 9, steps S4 to S6, S9, and S13 to S16 are preferred examples of the present invention, but are not required to the present invention. For example, one or two of steps S4 to S6 may be performed, or one, two, or three of steps S13 to S16 may be performed.
   In addition, the order of steps S4 to S6 is not particularly limited and may be performed in any order or in parallel. The order of steps S13 to S16 is not particularly limited and may be performed in any order or in parallel.
   Furthermore, the signs LB1 and LB2 in FIG. 2(b) are preferred examples of the present invention, but are not required to the present invention. In addition, the operating device 1 may have one of the signs LB1 and LB2.
(2) In FIG. 4, the allocation unit 320 and the display control unit 265 are included in separate control devices (main control device 30 and display control device 26), but the allocation unit 320 and the display control unit 265 may be included in the same control device. In addition, the main control device 30 realizing the allocation unit 320 and the display control device 26 realizing the display control unit 265 are examples, and the allocation unit 320 and the display control unit 265 can be realized by any computer.
(3) The operation unit 20 in FIG. 1 may be fixed to the control cabin 205, or the operation unit 20 may be detachable to and from the control cabin 205. In addition, the operation unit 20 may also a portable communication terminal, such as a smartphone and a tablet.
(4) The display unit 22 may display an error screen containing error information for the work vehicle 100. Then, when the buzzer in accordance with the error is to be stopped, regardless of the function allocated to the dial 12, the buzzer is stopped by pressing the push button 24 corresponding to the buzzer stop among the push buttons 24A to 24F.
(5) In this embodiment described with reference to FIGS. 1 to 14, the hydraulic excavator is used as one example of the work vehicle 100; however, as long as the rotation speed of the engine 501 is adjusted by the dial 12, the work vehicle 100 is not limited to the hydraulic excavator, but may be, for example, another construction machine or agricultural machine. The construction machine is, for example, a loader such as a wheel loader, or a carrier. The agricultural machines is, for example, a riding tractor, a riding combine harvester, or a riding rice transplanter.

### INDUSTRIAL APPLICABILITY

The present invention relates to an operating device, a work vehicle, and an operation control method, and has industrial applicability.

### DESCRIPTION OF REFERENCE NUMERALS

1: Operating device
12: Dial
14A: Allocation change switch
14B: Initial screen switch (operating element)
14C: Return switch (operating element)
16: Light emitting unit (function notification unit)
18: Backlight (function notification unit)
22: Display unit
70: First function notification image (first function notification information)
75: Rotation speed image (rotation speed information)
80: Second function notification image (second function notification information)
82: Function notification image (unction notification information)
100: Work vehicle
265: Display control unit (function notification unit)
300: Work machine
320: Allocation unit
LB1, LB2: Sign
SCC: Second setting screen (first screen)
SCD: Third setting screen (second screen)
SCF: Second function operation screen (third screen)
SCG: Third function operation screen (fourth screen)

## Claims

1. An operating device (1), comprising:
a dial (12) configured to receive a rotational operation;
a display unit (22); and
an allocation unit (320)
**characterized in that**
the allocation unit is configured to selectively allocate to the dial (12) either an engine operational function to adjust a rotation speed of an engine or a screen operational function to perform an operation in accordance with a screen displayed on the display unit (22).

2. The operating device (1) according to claim 1, wherein
the allocation unit (320) is configured to allocate the engine operational function to the dial (12) in response to turning on of a key switch for starting up the engine.

3. The operating device (1) according to claim 1 or 2, further comprising:
a function notification unit configured to notify which of the engine operational function and the screen operational function is allocated to the dial (12) in a recognizable manner by vision.

4. The operating device (1) according to claim 3, wherein
the function notification unit is configured to notify the function allocated to the dial (12) at or next to the dial in a recognizable manner by vision.

5. The operating device (1) according to claim 3 or 4, wherein
the function notification unit is configured to emit visible light of different colors at a base end part of the dial (12) in a case where the engine operational function is allocated to the dial (12) and in a case where the screen operational function is allocated to the dial (12).

6. The operating device (1) according to claim 3, wherein
the function notification unit is configured to control the display unit (22) to temporarily display a first function notification information according to a fact that the engine operational function is allocated to the dial (12),
the first function notification information indicates that the engine operational function is allocated to the dial (12),
the function notification unit is configured to control the display unit (22) to temporarily display a second function notification information according to a fact that the screen operational function is allocated to the dial (12), and
the second function notification information indicates that the screen operational function is allocated to the dial (120.

7. The operating device (1) according to claim 3 or 6, wherein
the function notification unit is configured to control the display unit (22) to display function notification information indicating that the screen operational function is allocated to the dial (12) for a period of time during which the screen operational function is allocated to the dial (12).

8. The operating device (1) according to any one of claims 1 to 7, wherein
the display unit (22) is configured to temporarily display rotation speed information indicating the rotation speed of the engine according to the rotational operation of the dial (12), in a case where the engine operational function is allocated to the dial (12).

9. The operating device (1) according to any one of claims 1 to 8, comprising:
a sign indicating that the dial (12) has the engine operational function, wherein
the sign is arranged next to or on the dial (12).

10. The operating device (1) according to any one of claims 1 to 9, further comprising:
an operating element that is arranged next to the dial (12) and is configured to receive an operation, wherein
in a case where the screen operational function is allocated to the dial (12), operation information of the operating element is received as valid information, and
in a case where the engine operational function is allocated to the dial (12), operation information of the operating element is not received as invalid information.

11. The operating device (1) according to any one of claims 1 to 10, wherein
in the case where the screen operational function is allocated to the dial (12), during a period when a first screen is displayed for inputting information, the display unit (22) is configured to change the first screen to a second screen for inputting the information according to a fact that the dial (12) receives a pressing operation, and
in the case where the engine operational function is allocated to the dial (12), a change from the first screen to the second screen is not performed.

12. The operating device (1) according to any one of claims 1 to 11, further comprising:
a display control unit (265) configured to control the display unit (22), wherein
during a period when a fourth screen is displayed on the display unit (22) after a screen displayed on the display unit (22) is changed from a third screen to the fourth screen according to a pressing operation of the dial (12), in a case where the dial (12) receives the pressing operation again before receiving the rotational operation, the display unit (22) is configured to change the fourth screen to the third screen, and
each of the third screen and the fourth screen is a screen that receives an operation to perform a function related to a machine.

13. A work vehicle (100), comprising:
the operating device (1) according to any one of claims 1 to 12; and
a work machine (300) that performs work.

14. An operation control method executed in an operating device (1) that comprises a dial (12) and a display unit (22), comprising the steps of
selectively allocating to the dial (12) either an engine operational function to adjust a rotation speed of an engine or a screen operational function to perform an operation in accordance with a screen displayed on the display unit (22); and
receiving a rotational operation by the dial (12).

## Patentansprüche

1. Betätigungsvorrichtung (1) umfassend:
eine Wählvorrichtung (12), die dazu konfiguriert ist, eine Drehbetätigung zu empfangen;
eine Anzeigeeinheit (22); und
eine Zuweisungseinheit (320)
**gekennzeichnet dadurch, dass**
die Zuweisungseinheit dazu konfiguriert ist, der Wählvorrichtung (12) entweder eine Motorbetätigungsfunktion, um eine Drehgeschwindigkeit eines Motors anzupassen, oder eine Bildschirmbetätigungsfunktion, um eine Betätigung in Übereinstimmung mit einem auf der Anzeigeeinheit (22) angezeigten Bildschirm durchzuführen, selektiv zuzuweisen.

2. Betätigungsvorrichtung (1) gemäß Anspruch 1, wobei
die Zuweisungseinheit (320) dazu konfiguriert ist, der Wählvorrichtung (12) die Motorbetätigungsfunktion als Antwort auf das Drehen eines Schlüsselschalters zum Starten des Motors zuzuweisen.

3. Betätigungsvorrichtung (1) gemäß Anspruch 1 oder 2, ferner umfassend:
eine Funktionsmitteilungseinheit, die dazu konfiguriert ist, mitzuteilen, welche von der Motorbetätigungsfunktion und der Bildschirmbetätigungsfunktion auf eine durch Sicht erkennbare Weise der Wählvorrichtung zugewiesen wird.

4. Betätigungsvorrichtung (1) gemäß Anspruch 3, wobei
die Funktionsmitteilungseinheit dazu konfiguriert ist, die Funktion mitzuteilen, die der Wählvorrichtung (12) an oder neben der Wählvorrichtung auf eine durch Sicht erkennbare Weise zugewiesen wird.

5. Betätigungsvorrichtung (1) gemäß Anspruch 3 oder 4, wobei
die Funktionsmitteilungseinheit dazu konfiguriert ist, sichtbares Licht von unterschiedlichen Farben an einem Basisendteil der Wählvorrichtung (12) in einem Fall zu emittieren, in dem der Wählvorrichtung (12) die Motorbetätigungsfunktion zugewiesen ist, und in einem Fall, in dem der Wählvorrichtung (12) die Bildschirmbetätigungsvorrichtung zugewiesen ist.

6. Betätigungsvorrichtung (1) gemäß Anspruch 3, wobei
die Funktionsmitteilungseinheit dazu konfiguriert ist, die Anzeigeeinheit (22) dazu zu steuern, gemäß einem Sachverhalt, dass der Wählvorrichtung (12) die Motorbetätigungsfunktion zugewiesen ist, eine erste Funktionsmitteilungsinformation temporär anzuzeigen,
die erste Funktionsmitteilungsinformation angibt, dass der Wählvorrichtung (12) die Motorbetätigungsfunktion zugewiesen ist,
die Funktionsmitteilungseinheit dazu konfiguriert ist, die Anzeigeeinheit (22) dazu zu steuern, gemäß einem Sachverhalt, dass der Wählvorrichtung (12) die Bildschirmbetätigungsfunktion zugewiesen ist, eine zweite Funktionsmitteilungsinformation temporär anzuzeigen, und
die zweite Funktionsmitteilungsinformation angibt, dass der Wählvorrichtung (12) die Bildschirmbetätigungsfunktion zugewiesen ist.

7. Betätigungsvorrichtung (1) gemäß Anspruch 3 oder 6, wobei
die Funktionsmitteilungseinheit dazu konfiguriert ist, die Anzeigeeinheit (22) dazu zu steuern, Funktionsmitteilungsinformationen anzuzeigen, die angeben, dass die Bildschirmbetätigungsfunktion der Wählvorrichtung (12) für einen Zeitraum zugewiesen ist, während dem der Wählvorrichtung (12) die Bildschirmbetätigungsfunktion zugewiesen ist.

8. Betätigungsvorrichtung (1) gemäß einem der Ansprüche 1 bis 7, wobei
die Anzeigeeinheit (22) dazu konfiguriert ist, Drehgeschwindigkeitsinformationen, die die Drehgeschwindigkeit des Motors gemäß der Drehbetätigung der Wählvorrichtung (12) angeben, in einem Fall. in dem der Wählvorrichtung (12) die Motorbetätigungsfunktion zugewiesen ist temporär anzuzeigen.

9. Betätigungsvorrichtung (1) gemäß einem der Ansprüche 1 bis 8, umfassend:
ein Zeichen, das angibt, dass die Wählvorrichtung (12) die Motorbetätigungsfunktion aufweist, wobei
das Zeichen neben oder auf der Wählvorrichtung (12) angeordnet ist.

10. Betätigungsvorrichtung (1) gemäß einem der Ansprüche 1 bis 9, ferner umfassend:
ein Betätigungselement, das neben der Wählvorrichtung (12) angeordnet ist und dazu konfiguriert ist, eine Betätigung zu empfangen, wobei
in einem Fall, in dem der Wählvorrichtung (12) die Bildschirmbetätigungsfunktion zugewiesen ist, Betätigungsinformationen des Betätigungselements als gültige Informationen empfangen werden, und
in einem Fall, in dem der Wählvorrichtung (12) die Motorbetätigungsfunktion zugewiesen ist, Betätigungsinformationen des Betätigungselements nicht als ungültige Informationen empfangen werden.

11. Betätigungsvorrichtung (1) gemäß einem der Ansprüche 1 bis 10, wobei
in dem Fall, in dem der Wählvorrichtung (12) die Bildschirmbetätigungsfunktion zugewiesen ist, die Anzeigeeinheit (22) während eines Zeitraums, wenn ein erster Bildschirm zum Eingeben von Informationen angezeigt wird, dazu konfiguriert ist, den ersten Bildschirm gemäß einem Sachverhalt, dass die Wählvorrichtung (12) eine Drückbetätigung empfängt, in einen zweiten Bildschirm zum Eingeben der Informationen zu wechseln, und
in dem Fall, in dem der Wählvorrichtung (12) die Motorbetätigungsfunktion zugewiesen ist, ein Wechsel von dem ersten Bildschirm zu dem zweiten Bildschirm nicht durchgeführt wird.

12. Betätigungsvorrichtung (1) gemäß einem der Ansprüche 1 bis 11, ferner umfassend:
eine Anzeigesteuereinheit (265), die dazu konfiguriert ist, die Anzeigeeinheit (22) zu steuern, wobei
die Anzeigeeinheit (22) während eines Zeitraums, wenn ein vierter Bildschirm auf der Anzeigeeinheit (22) angezeigt wird, nachdem ein auf der Anzeigeeinheit (22) angezeigter Bildschirm von einem dritten Bildschirm gemäß einer Drückbetätigung der Wählvorrichtung (12) in einen vierten Bildschirm gewechselt wird, in einem Fall, in dem die Wählvorrichtung (12) vor Empfangen der Drehbetätigung die Drückbetätigung erneut empfängt, dazu konfiguriert ist, den vierten Bildschirm in den dritten Bildschirm zu wechseln, und
jeder von dem dritten Bildschirm und dem vierten Bildschirm ein Bildschirm ist, der eine Betätigung empfängt, um eine auf eine Maschine bezogene Funktion durchzuführen.

13. Arbeitsfahrzeug (100), umfassend:
die Betätigungsvorrichtung (1) gemäß einem der Ansprüche 1 bis 12; und
eine Arbeitsmaschine (300), die Arbeit durchführt.

14. Betätigungssteuerverfahren, das in einer Betätigungsvorrichtung (1) ausgeführt wird, die eine Wählvorrichtung (12) und eine Anzeigeeinheit (22) umfasst, umfassend die folgenden Schritte:
selektives Zuweisen, an die Wählvorrichtung (12), entweder einer Motorbetätigungsfunktion, um eine Drehgeschwindigkeit eines Motors anzupassen, oder einer Bildschirmbetätigungsfunktion, um eine Betätigung gemäß einem auf der Anzeigeeinheit (22) angezeigten Bildschirm durchzuführen; und
Empfangen einer Drehbetätigung durch die Wählvorrichtung (12).

## Revendications

1. Dispositif d'actionnement (1) comprenant :
un cadran (12) configuré pour recevoir un actionnement en rotation ;
une unité d'affichage (22) ; et
une unité d'allocation (320)
**caractérisée en ce que**
l'unité d'allocation est configurée pour allouer sélectivement au cadran (12) soit une fonction d'actionnement de moteur pour ajuster une vitesse de rotation d'un moteur soit une fonction d'actionnement d'écran pour réaliser un actionnement conformément à un écran affiché sur l'unité d'affichage (22).

2. Dispositif d'actionnement (1) selon la revendication 1, dans lequel
l'unité d'allocation (320) est configurée pour allouer la fonction d'actionnement de moteur au cadran (12) en réponse à l'activation d'une serrure à contact pour démarrer le moteur.

3. Dispositif d'actionnement (1) selon la revendication 1 ou 2, comprenant en outre :
une unité de notification de fonction configurée pour notifier laquelle de la fonction d'actionnement de moteur et de la fonction d'actionnement d'écran est allouée au cadran (12) d'une manière reconnaissable par vision.

4. Dispositif d'actionnement (1) selon la revendication 3, dans lequel
l'unité de notification de fonction est configurée pour notifier la fonction allouée au cadran (12) au niveau du cadran ou à côté de celui-ci d'une manière reconnaissable par vision.

5. Dispositif d'actionnement (1) selon la revendication 3 ou 4, dans lequel
l'unité de notification de fonction est configurée pour émettre de la lumière visible de différentes couleurs au niveau d'une partie d'extrémité de base du cadran (12) dans un cas où la fonction d'actionnement de moteur est allouée au cadran (12) et dans un cas où la fonction d'actionnement d'écran est allouée au cadran (12).

6. Dispositif d'actionnement (1) selon la revendication 3, dans lequel
l'unité de notification de fonction est configurée pour contrôler l'unité d'affichage (22) pour afficher temporairement des premières informations de notification de fonction selon le fait que la fonction d'actionnement de moteur est allouée au cadran (12),
les premières informations de notification de fonction indiquent que la fonction d'actionnement de moteur est allouée au cadran (12),
l'unité de notification de fonction est configurée pour contrôler l'unité d'affichage (22) pour afficher temporairement des deuxièmes informations de notification de fonction selon le fait que la fonction d'actionnement d'écran est allouée au cadran (12), et
les deuxièmes informations de notification de fonction indiquent que la fonction d'actionnement d'écran est allouée au cadran (12).

7. Dispositif d'actionnement (1) selon la revendication 3 ou 6, dans lequel
l'unité de notification de fonction est configurée pour contrôler l'unité d'affichage (22) pour afficher des informations de notification de fonction indiquant que la fonction d'actionnement d'écran est allouée au cadran (12) pour une période de temps au cours de laquelle la fonction d'actionnement d'écran est allouée au cadran (12).

8. Dispositif d'actionnement (1) selon l'une quelconque des revendications 1 à 7, dans lequel
l'unité d'affichage (22) est configurée pour afficher temporairement des informations de vitesse de rotation indiquant la vitesse de rotation du moteur selon l'actionnement en rotation du cadran (12), dans un cas où la fonction d'actionnement de moteur est allouée au cadran (12).

9. Dispositif d'actionnement (1) selon l'une quelconque des revendications 1 à 8, comprenant :
un signe indiquant que le cadran (12) a la fonction d'actionnement de moteur, dans lequel
le signe est agencé à côté du cadran (12) ou sur celui-ci.

10. Dispositif d'actionnement (1) selon l'une quelconque des revendications 1 à 9, comprenant en outre :
un élément d'actionnement qui est agencé à côté du cadran (12) et qui est configuré pour recevoir un actionnement, dans lequel
dans un cas où la fonction d'actionnement d'écran est allouée au cadran (12), des informations d'actionnement de l'élément d'actionnement sont reçues en tant qu'informations valides, et
dans un cas où la fonction d'actionnement de moteur est allouée au cadran (12), des informations d'actionnement de l'élément d'actionnement ne sont pas reçues en tant qu'informations invalides.

11. Dispositif d'actionnement (1) selon l'une quelconque des revendications 1 à 10, dans lequel
dans le cas où la fonction d'actionnement d'écran est allouée au cadran (12), au cours d'une période pendant laquelle un premier écran est affiché pour une saisie d'informations, l'unité d'affichage (22) est configurée pour changer le premier écran vers un deuxième écran pour une saisie des informations selon le fait que le cadran (12) reçoit un actionnement de pression, et
dans le cas où la fonction d'actionnement de moteur est allouée au cadran (12), un changement depuis le premier écran vers le deuxième écran n'est pas réalisé.

12. Dispositif d'actionnement (1) selon l'une quelconque des revendications 1 à 11, comprenant en outre :
une unité de contrôle d'affichage (265) configurée pour contrôler l'unité d'affichage (22), dans laquelle
au cours d'une période pendant laquelle un quatrième écran est affiché sur l'unité d'affichage (22) après qu'un écran affiché sur l'unité d'affichage (22) soit changé depuis un troisième écran vers le quatrième écran selon un actionnement de pression du cadran (12), dans un cas où le cadran (12) reçoit à nouveau l'actionnement de pression avant de recevoir l'actionnement en rotation, l'unité d'affichage (22) est configurée pour changer le quatrième écran vers le troisième écran, et
chacun du troisième écran et du quatrième écran est un écran qui reçoit un actionnement pour réaliser une fonction liée à une machine.

13. Véhicule de travail (100), comprenant :
le dispositif d'actionnement (1) selon l'une quelconque des revendications 1 à 12 ; et
une machine de travail (300) qui réalise un travail.

14. Procédé de contrôle d'actionnement exécuté dans un dispositif d'actionnement (1) qui comprend un cadran (12) et une unité d'affichage (22), comprenant les étapes consistant à
allouer sélectivement au cadran (12) soit une fonction d'actionnement de moteur pour ajuster une vitesse de rotation d'un moteur soit une fonction d'actionnement d'écran pour réaliser un actionnement conformément à un écran affiché sur l'unité d'affichage (22) ; et
recevoir un actionnement en rotation par le cadran (12).
